# EUROPEAN PATENT SPECIFICATION

(11) **EP 4 249 884 B1**
(45) Date of publication and mention of the grant of the patent: **12.11.2025**
(21) Application number: 23162828.0
(22) Date of filing: 20.03.2023
(51) Int. Cl.: G01M 15/02, G01M 15/05, G01M 15/14, G05B 23/02, G01L 5/13, G07C 3/00

(54) **METHOD AND APPARATUS FOR THRUST DETERMINATION IN AN AIRCRAFT ENGINE**
VERFAHREN UND VORRICHTUNG ZUR SCHUBBESTIMMUNG IN EINEM FLUGZEUGTRIEBWERK
PROCÉDÉ ET APPAREIL DE DÉTERMINATION DE POUSSÉE DANS UN MOTEUR D'AÉRONEF

(30) Priority: 23.03.2022 US 202263322689 P; 15.03.2023 US 202318121810
(43) Date of publication of application: 27.09.2023
(73) Proprietor: General Electric Company, Evendale, OH 45215 (US)
(72) Inventor: DRODOFSKY, Matthew, Seattle, 98124 (US); DREIKOSEN, Andrew, Evendale, 45241 (US); BLAKEMAN, Lance, Evendale, 45241 (US); McCLAIN, Michael, Schenectady, 12345 (US); OSTDIEK, David, Evendale, 45241 (US); SPRUILL, Jeffrey, Evendale, 45241 (US)
(74) Representative: Openshaw & Co.

(56) References cited:
- EP-A1- 3 070 562
- EP-A1- 3 647 759
- US-A- 4 215 412

## Description

### Cross references to related applications

This application claims the benefit of the following: U.S. Provisional Application 63/322,689 filed on March 23, 2022.

### Technical Field

These teachings relate generally to aircraft engines and, more particularly, to thrust determinations made for aircraft engines.

EP3647759A1 discloses a method of calibrating an engine core of a gas turbine engine. The method comprises providing a resistance load on the core shaft, the resistance load arranged to replicate the load of a propulsive fan; driving the engine core; measuring a performance parameter or the engine core; measuring a thrust generated by the engine core; and determining a power rating data of the engine core, and providing a correlation between the performance parameter and the thrust.

US4215412A discloses a real-time gas turbine engine monitoring system is disclosed which includes a digital processor that utilizes a set of scalar coefficients and the current value of various engine operating parameters to predict the current value of a set of engine performance parameters.

EP3070562A1 discloses a method for determining an updated engine health factor of an aircraft engine. The method includes determining an engine health condition indicative of an engine health during operation of the aircraft engine. The method also includes determining a baseline engine power model for the aircraft engine and modifying the baseline engine power model using the determined engine condition.

### Background

Aircraft engines have various parameters associated with their operation. One of these parameters is thrust. Thrust is generally defined as the amount of force that is used to move the aircraft through the air. Certain amounts of thrust are required to safely operate the aircraft in different operational states. For example, certain amounts of thrust may be required to allow the aircraft to take off or to cruise during flight. In aspects, thrust is calculated using various parameters that are measured by sensors deployed at the aircraft such as engine shaft speed and engine torque. Thrust is highly correlated to power and power is equal to torque times shaft speed.

### Brief Description of the Drawings

Various needs are at least partially met through provision of the method and apparatus for determining thrust for aircraft engines described in the following detailed description, particularly when studied in conjunction with the drawings. A full and enabling disclosure of the aspects of the present description, including the best mode thereof, directed to one of ordinary skill in the art, is set forth in the specification, which refers to the appended figures, in which:
FIG. 1 comprises a flow diagram as configured in accordance with various embodiments of these teachings;
FIG. 2 comprises a diagram as configured in accordance with various embodiments of these teachings;
FIG. 3A comprises a diagram as configured in accordance with various embodiments of these teachings;
FIG. 3B comprises a flow diagram and diagram as configured in accordance with various embodiments of these teachings;
FIG. 4 comprises a diagram as configured in accordance with various embodiments of these teachings;
FIG. 5 comprises a diagram as configured in accordance with various embodiments of these teachings;
FIG. 6 comprises a diagram as configured in accordance with various embodiments of these teachings;
FIG. 7 comprises a diagram as configured in accordance with various embodiments of these teachings;
FIG. 8A comprises a diagram as configured in accordance with various embodiments of these teachings;
FIG. 8B comprises a diagram as configured in accordance with various embodiments of these teachings;
FIG. 8C comprises a diagram as configured in accordance with various embodiments of these teachings;
FIG. 8D comprises a diagram as configured in accordance with various embodiments of these teachings;
FIG. 9A comprises a diagram as configured in accordance with various embodiments of these teachings;
FIG. 9B comprises a diagram as configured in accordance with various embodiments of these teachings;
FIG. 9C comprises a diagram as configured in accordance with various embodiments of these teachings;
FIG. 9D comprises a diagram as configured in accordance with various embodiments of these teachings;
FIG. 9E comprises a diagram as configured in accordance with various embodiments of these teachings;
FIG. 9F comprises a diagram as configured in accordance with various embodiments of these teachings;
FIG. 10 comprises a diagram as configured in accordance with various embodiments of these teachings;
FIG. 11 comprises a diagram as configured in accordance with various embodiments of these teachings;
FIG. 12A comprises a diagram as configured in accordance with various embodiments of these teachings;
FIG. 12B comprises a diagram as configured in accordance with various embodiments of these teachings;
FIG. 12C comprises a diagram as configured in accordance with various embodiments of these teachings;
FIG. 12D comprises a diagram as configured in accordance with various embodiments of these teachings;
FIG. 12E comprises a diagram as configured in accordance with various embodiments of these teachings;
FIG. 12F comprises a diagram as configured in accordance with various embodiments of these teachings;
FIG. 12G comprises a diagram as configured in accordance with various embodiments of these teachings; and
FIG. 12H comprises a diagram as configured in accordance with various embodiments of these teachings.

Elements in the figures are illustrated for simplicity and clarity and have not necessarily been drawn to scale. For example, the dimensions and/or relative positioning of some of the elements in the figures may be exaggerated relative to other elements to help to improve understanding of various embodiments of the present teachings. Also, common but well-understood elements that are useful or necessary in a commercially feasible embodiment are often not depicted in order to facilitate a less obstructed view of these various embodiments of the present teachings. Certain actions and/or steps may be described or depicted in a particular order of occurrence while those skilled in the art will understand that such specificity with respect to sequence is not actually required.

### Detailed Description

The present approaches provide processes that directly evaluate overall engine thrust statically on the ground and connect or associate the evaluation results to projected on-wing thrust of the engine during flight. Advantageously, the approaches provided herein allow thrust ratings to be developed for aircraft and these ratings can be used to evaluate aircraft engine performance. The approaches described herein can use a calibrated model to fine-tune engine control hardware and/or software in engines that are being manufactured before the engines leave the manufacturing facility. These approaches can also be utilized for engines that already have been deployed, e.g., as an engine software update. The approaches provided herein are also applicable to and can be utilized by a wide variety of engine types and configurations including unducted aircraft engines.

The invention as claimed is defined by a method according to appended claim 1 and a system according to appended claim 10. An analytical model is used to determine thrust on board an aircraft. The analytical model is a correlated, highly accurate model, initially formed analytically, but refined during ground testing to modify its internal structure according to one or more modifiers. The modifiers are determined by a ground testing procedure executed with the engine being operated at full power and where the engine is tested under actual flight conditions, flight-like conditions, or conditions as near to flight as possible and where, in aspects, the engine is an unducted aircraft engine. The ground testing directly measures both torque and thrust during the full power engine operation. The analytical model also predicts or calculates torque and thrust. Based upon the differences between the model-predicted or calculated values and the measured values, the modifiers are determined or chosen.

The approaches provided herein allow a direct correlation to be made between aircraft engine architectures tested on the ground (e.g., uninstalled, static thrust testing of the engine where the engine is installed in or at a test stand that is structurally affixed to or rests on the ground) measuring thrust and fan/propellor torque (e.g., where the test uses test enabling hardware to emulate flight velocity) and the calculated in-flight thrust of an engine. The correlation is used to calibrate and/or improve the accuracy of the calculated in-flight thrust. Various configurations of ground testing hardware can be used to simulate in-flight thrust in the testing environment and the approaches provided herein are not limited to any particular type of testing or ground hardware configuration.

Additionally, the processes described herein allow for the successful full engine testing in a production environment. In particular, in these examples, testing occurs only on the ground and the thrust produced by each engine is tracked and/or calibrated prior to customer shipment. This process allows the verification of engine performance before flight and provides a way to consistently test every production engine to verify the thrust level prior to customer shipment.

The particular approaches described herein are particularly applicable to unducted aircraft engines. A turbofan engine operates on the principle that a central gas turbine core drives a bypass fan, the bypass fan being located at a radial location between a fan duct and the engine core. An unducted propulsion system on the other hand operates on the principle of having the bypass fan not located within a fan duct. Removal of the fan duct permits the use of larger fan blades able to act upon a larger volume of air than a bypass fan located within a fan duct. An unducted propulsion system can have an improved propulsive efficiency over a ducted turbofan engine.

Generally speaking, turbofan engines produce 100% of their thrust with ducted exhaust streams. In examples, unducted aircraft engines produce approximately 80% of their thrust with their (unducted) fan blades and around 20% with ducted exhaust streams. Turbofan testing measures thrust but not torque on the ground testing. Turbofans do not need special testing hardware to simulate air flow into the engine because they are already ducted, and commonly are tested measuring airflow entering the engine inlet.

Turboprop engines have a propeller that generally provides approximately 95% of the required thrust with their propeller blades and only 5% with exhaust streams. Turboprop engines typically operate at slower range of flight speeds and, generally speaking, the propeller arrangement and power generation portion of the engine are manufactured by different sources. Testing of turboprop engines does not measure thrust and only measures torque on the ground. Turbofan, turboprop, and unducted aircraft engines typically may also include engine sensors to measure variable geometry system positions, pressure, temperature, fuel flow, and shaft speed.

It would be appreciated that the terms "fan blades" and "propellers" are used herein to describe the blades, elements, components, or instruments used to direct air through or about an aircraft engine. It will be understood that these terms are interchangeable in this description.

In contrast to the above-mentioned previous approaches, the approaches provided herein provide ground testing of unducted aircraft engines running at full power directly measuring both thrust and torque under simulated in-flight conditions, near-flight conditions, or as near to flight conditions as possible to adjust an analytical model with modifiers to create a correlated model. The correlated model can be used aboard an aircraft to predict thrust and torque. Alternatively, the correlated model could be disposed on the ground as a stand-alone model. In other words, the correlated model may be aboard the aircraft (e.g., in a portable electronic device) or on the ground (e.g., a personal computer or laptop on the ground). The predicted thrust and torque have improved accuracy in contrast to previous approaches used. The testing procedure proposed improves accuracy via model calibration to simulated in-flight measured thrust (or simulated as near to flight thrust as possible) and torque collected during ground test.

Actual in-flight testing occurs and predicted thrust and torque are obtained using actual aircraft and engine sensor measurements as inputs to the ground test thrust and torque calibrated model. The predicted thrust and torque can be utilized, for example, to compare with required thrust and torque. Appropriate engine power, thrust, and variable geometry system position control adjustments can then be made to components of the engine.

The terms and expressions used herein have the ordinary technical meaning as is accorded to such terms and expressions by persons skilled in the technical field as set forth above except where different specific meanings have otherwise been set forth herein. The word "or" when used herein shall be interpreted as having a disjunctive construction rather than a conjunctive construction unless otherwise specifically indicated. The terms "coupled," "fixed," "attached to," and the like refer to both direct coupling, fixing, or attaching, as well as indirect coupling, fixing, or attaching through one or more intermediate components or features, unless otherwise specified herein.

The singular forms "a", "an", and "the" include plural references unless the context clearly dictates otherwise.

Approximating language, as used herein throughout the specification and claims, is applied to modify any quantitative representation that could permissibly vary without resulting in a change in the basic function to which it is related. Accordingly, a value modified by a term or terms such as "about", "approximately", and "substantially", are not to be limited to the precise value specified. In at least some instances, the approximating language may correspond to the precision of an instrument for measuring the value, or the precision of the methods or machines for constructing or manufacturing the components and/or systems. For example, the approximating language may refer to being within a 10 percent margin.

The foregoing and other benefits may become clearer upon making a thorough review and study of the following detailed description.

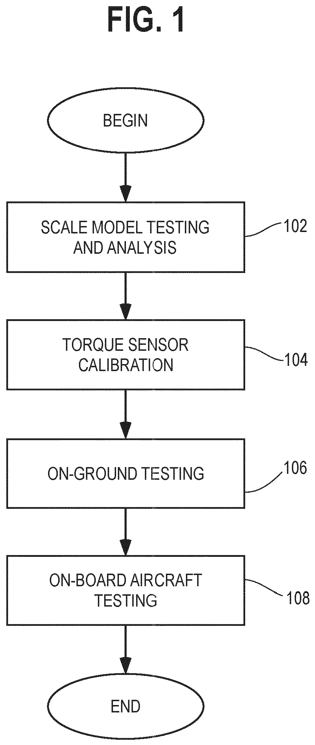

Referring now to FIG. 1, one example of an approach for thrust calibration in an aircraft engine is described.

At step 102, scale model testing and analysis for a particular aircraft engine (e.g., a turboprop aircraft engine) is performed. In aspects, a small (e.g., 10% of actual engine size in terms of engine dimensions and/or engine performance characteristics) model of an engine can be built and used for this testing. Different analytical (e.g., software) tools, simulation tools, or testing programs can also be used to determine or model performance results for an engine having a specific design (e.g., propellers or fan blades of a certain size or pitch). For example, commercially available software tools with computational fluid dynamic (CFD) capabilities can be used. For example, the CFX software tool produced by Ansys, Incorporated may be used.

In one specific example, for a particular power applied to the propeller (or fan blade) of an engine, a particular pitch angle of the propeller (or fan blade), and/or other parameters, the analytical tool determines how much thrust will be provided by the propeller (or fan blade) and the efficiency of the engine having a particular engine design and configuration. In other aspects, the analytical tool, scale model testing, and/or full-scale engine testing can consider configurations or effects produced by test hardware (e.g., that will emulate flight velocity), test stands, or other testing devices. Analytical tools may also be used in conjunction with scale model test results to translate the scale model test results to full scale characteristics.

In another particular example, a scale model of an engine (that is smaller in size to the actual engine such as 10% the actual size) is built. For a particular power applied to the propeller (or the fan blade) of the scale model of an engine, a particular pitch angle of the propeller of the scale model, and/or other parameters, measurements of parameters of the scale model of the engine may be made (such as thrust). An analytical tool (e.g., the CFX analytical tool) determines how much thrust will be provided by the propeller (e.g., by using various equations with the measured parameters being the inputs to the equations) and the efficiency of the full-scale engine represented by the scale model. In other words, scale model results (scale model thrust) can be measured at the scale model and the analytical tool used to project these results into what would be seen on a full-scale engine (e.g., the scale model thrust measured on the scale model is projected to full-scale thrust seen on a full-scale engine).

The results of the scale model testing is used to create or define an analytical model representing the performance of the full-scale engine in various configurations including installed on the aircraft, and in ground-level test cells or open-air test facilities with associated testing hardware. The analytical model may be represented or defined as an electronic file (with information including the performance results), including one or more equations (e.g., describing engine performance or thrust determination), engine performance or operating parameters, and/or some other elements related to how the engine operates, the engine's dimensions, efficiency, or other characteristics.

In other examples, the analytical model is a machine learning model (e.g., a neural network) that has been trained using past engine data. These analytical models may be used in a predictive mode to project engine performance with the basic boundary conditions of throttle setting and flight condition. The analytical model may also be used in data reduction or synthesis mode, using supplementary instrumentation to better determine component and overall performance levels.

At step 104, a torque offset is determined for one or more engine control torque sensors on a specific aircraft engine that is to be tested. In this step, the one or more engine control torque sensors are calibrated to ensure they provide highly or extremely accurate measurements. It will be appreciated that this step allows for more accurate determinations as described below, but in some examples the torque sensor need not be calibrated and this step may be omitted. It will be appreciated that the torque sensor that is being calibrated (referred to herein as an "engine control torque sensor") is different than other torque sensors not disposed in the engine (referred to herein as a "precision torque meter") but used in the ground testing to calibrate the engine control torque sensors.

One approach at calibrating an engine control torque sensor is now described. An unducted aircraft engine is run without its fan blades or propellers. By removing the fan blades or propellors, the power they would absorb can be directed out of a shaft in the front of a gearbox of the engine to a precision torque meter and a load absorbing device such as a water brake. The precision torque meter measures the torque or power of the unducted aircraft engine that would normally be consumed by the fan blades or propellors. After the precision torque measurement is made, the power from the unducted aircraft engine without propellors can be absorbed into a device such as the water brake. As is known, power = torque * speed, thus a speed measurement can be taken with the torque measurement to determine power.

An engine control torque sensor on or at the engine measures the torque of the engine. The engine control torque sensor has its readings adjusted according to the precision torque meter. For example, if the engine control torque sensor measures 5000 units of force (e.g., Newton meters or pound feet) and the precision torque meter measures 5005 units of force (e.g., Newton metes or pound feet), the measurement results of the engine control torque sensor can be adjusted. In this particular example, an offset value of 5 (representing the difference between the precision torque meter measurement and the engine measurement) might be added to the measurement results of the engine control torque sensor to implement the calibration. The value of 5 can also be expressed as a percentage difference and added to all other torque readings to obtain calibrated torque readings. Since the precision torque meter is a more accurate sensor than the engine control torque sensor, the engine control torque sensor will add a difference (e.g., a percentage difference) to the measured value it measures to obtain a calibrated value, and thereby obtain a more accurate reading.

In a second example, a rig or other apparatus or structure holding the engine control torque sensor is constructed. In this second example, the engine control torque sensor is completely removed from the engine and/or has never been placed in the engine (e.g., the engine is being built). A highly accurate measurement device (e.g., precision torque meter) is connected to the rig (e.g., to its shaft) to measure torque. The values of the engine control torque sensor in the rig can then be correlated to the torque values measured with the highly accurate measuring device (the precision torque meter) as in the preceding example. The engine control torque sensor in the rig can then be integrated with a full-scale engine. In aspects, every engine will have a torque sensor, which requires calibration to a precision torque meter using this approach.

In a third example, if the fan blades or propellors are not removed, a precision torque meter and water brake may not be needed to measure torque and absorb load. In this case the propellor would be relied upon to extract load and a precision torquemeter could be positioned between the propellor and the gearbox within the aircraft engine. In this way, a precise torque meter may be positioned between the fan blades or propellors and the gearbox of an engine. The engine control torque sensor may be calibrated as described above in the other two examples.

Every engine or engines needing a high accuracy in-flight thrust prediction will have an engine control torque sensor, which requires calibration to a precision torque meter using one of these three approaches. However, as mentioned, it is also possible to omit this step and rely upon the accuracy of an uncalibrated engine control torque sensor.

At step 106, the engine is on the ground (not engaging in flight operations aboard an aircraft) in a simulated in-flight velocity testing environment (or under conditions on the ground that are as near to flight conditions as possible) and the goal is to determine any residual errors and/or unaccounted-for engine behaviors (whatever the source of these behaviors) of the engine in or affecting a thrust determination. For a given set of parameters, the engine is run (e.g., at full power) and fan/propellor torque and overall engine thrust are measured (e.g., using appropriate sensors). Individual ducted engine exhaust streams can be analytically predicted or instrumented to evaluate their thrust contributions. Other instrumentation may be used to measure or validate propeller full scale operation. Nacelle leakage and exhaust duct(s) area measurements can also be performed.

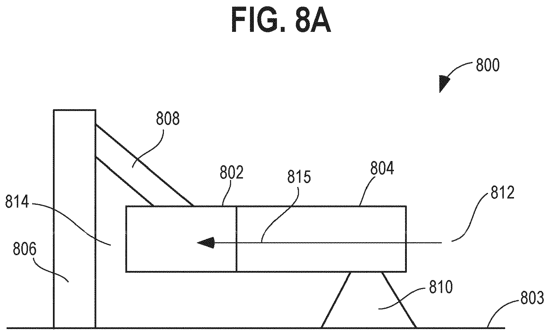

Various ground testing structures can be utilized to facilitate the ground testing. In one example, the ground testing is performed where the engine hangs from a structure above the ground that includes instrumentation to measure engine operation produced axial force (thrust). In another example, the engine is tested in a facility with a wall. The wall has a hole or opening sized to approximately the diameter of the engine propellor. The ground test is performed with the engine being placed nearly flush against the wall. In still other examples, testing hardware (e.g., as described with respect to FIGs. 8A-D through FIG.12A-H herein) can be used to accelerate the air being applied to the engine to approximate velocities of the air that would exist during actual flight conditions (e.g., the aircraft moving forward at velocities of .1 to .35 Mach). More specifically and in some examples, the air entering the propeller or fan approximates the flow speed and direction corresponding to a vehicle condition (e.g., an aircraft flight condition such as takeoff).

The thrust and fan/propellor torque actual measurements are compared to the thrust and torque predicted by the analytical model. In aspects, the differences can be considered errors and are used to create one or more modifiers to calibrate model thrust and/or balance the errors of thrust and torque. In aspects, the modifier is one or more arithmetic operators, operations, values, or constructs that are applied to components, structures, equations, or elements of the analytic model. A modifier can take the form of one or more scalar values (e.g., used to modify or scale any component, structure, equation, or element of the analytical model), one or more adder values (e.g., values that are added to any component, structure, equation, or element of the analytical model), one or more multipliers (e.g., values that are multiplied to any component, structure, equation, or element of the analytical model), one or more curves or tables of scalar values, one or more curves or table of adders or multipliers, or any combination thereof. The modifiers are used to adjust thrust values for in-flight cases where direct thrust measurement is not practical and in some aspects are numerical offset values. Higher valued modifiers may indicate higher error amounts (higher corrections) while lower valued modifiers may indicate lower error amounts (lower corrections). The modifiers are incorporated into, included with, applied to, and/or somehow represented by the analytical model to form a correlated model of the engine.

Multiple modifiers may be determined and applicable for different operational conditions or states of the aircraft. For example, one modifier (or group of modifiers) may be calculated for takeoff conditions, another modifier (or group of modifiers) for idle conditions, and another modifier (or group of modifiers) for cruising conditions. When used, the multiple modifiers (or multiple groups of modifiers) are incorporated into, included with, applied to, and/or somehow represented by the model to form a correlated model of the engine.

At step 108, the aircraft engine is installed on-board an aircraft. In this case, the aircraft engine is put aboard an aircraft and tested (e.g., tested during actual in-flight operations). In-flight operations may include taxi operations on the ground, aircraft takeoff, aircraft landing, and aircraft cruising operations (and combinations of these operations) to mention a few examples.

During these actual flight operations, the aircraft engine is an unducted aircraft engine and produces thrust. In one example, Thrust = Thrust X + Thrust Y +Thrust Z, where X, Y, and Z are exhaust or air streams emulating from the engine and Thrust is the total thrust produced by the unducted aircraft engine. In aspects, the thrust in the X stream (Thrust X) is the propeller or fan thrust modeled using or according to the correlated model, which includes, incorporates, or accounts for the modifiers obtained during ground testing. The correlated model is utilized to make a prediction of the thrust in the X stream. Thrust Y and Thrust Z are thrust from other "streams" in the engine (e.g., Thrust Y may be from an air stream flowing through the engine core and Thrust Z from a "third"" stream around the core but still in the engine). Thrust in the Y and Z streams can be calculated using readings from other aircraft and engine sensors to determine the thrust in these streams.

In aspects, sensors on the aircraft and engine obtain measurements during the on-board testing. Aircraft and engine pressure sensors may measure pressures. Aircraft and engine temperature sensors may measure temperatures. Engine shaft speed sensors may measure engine shaft speeds. The calibrated engine propellor or engine control torque sensor (that has been calibrated according to the process of step 104) measures a highly accurate torque. These may be applied to or utilized with the correlated model to obtain an adjusted or calibrated thrust (e.g., "Thrust" in the previous example) as described above. In one example, the thrust contribution of the propellor is calculated from the correlated model (e.g., an analytical map) using measured flight conditions, propellor rpm, propellor pitch angle, propellor outlet guide vane (OGV) angle (applicable to fans of some unducted aircraft engines), and torque along with the calibration modifiers in the model can be applied to the calculated thrust (e.g., as additions, subtractions, multipliers, and/or divisors) to determine an adjusted calculated thrust. In some aspects, pressure and temperature sensors throughout the engine are used in concert with known nozzle coefficients to project the thrust contributions of the propelling nozzles in the engine.

Once the total calibrated thrust of the aircraft engine is determined, it can be compared to ratings or needs that are required by an aircraft manufacturer or operator. For example, the total calibrated thrust may be 5000 units of thrust force (e.g., Newtons or pounds), but 6000 units of thrust force might be needed. Consequently, selected equipment, parts, or components in the aircraft or engine can be examined, and adjustments made to these devices to thereby adjust the thrust upward. In aspects, the thrust units are units of pound force (English units) or Newtons (metric units).

It can also be appreciated that this process can also be applied to a production environment. For example, testing occurs only on the ground as described with respect to step 106 and the thrust produced by each engine is tracked and/or calibrated prior to customer shipment. This process allows the verification of engine performance before flight and provides a way to consistently test every production engine to verify the thrust level prior to customer shipment.

More specifically, an approach for production testing of unducted aircraft engines includes obtaining a correlated analytical model of an unducted aircraft engine (e.g., obtained with step 106 of FIG. 1). The unducted aircraft engine includes an engine control torque sensor. The unducted aircraft engine is run at full power during a ground test. Full power is the power of the engine required at takeoff of the aircraft. The unducted aircraft engine is tested using testing hardware that simulates at least some flight-like or operational conditions for the unducted aircraft engine during the ground test.

The thrust of the unducted aircraft engine is measured during the ground test to obtain a measured thrust. The torque of the unducted aircraft engine is measured during the ground test using the engine control torque sensor to obtain a measured torque.

A predicted torque and a predicted thrust of the unducted aircraft engine are obtained using the correlated analytical model. The measured torque is compared to the predicted torque and the measured thrust is compared to the predicted thrust to obtain comparison results. Based upon the comparison results, control software for the engine is selectively adjusted. This adjustment may include the manually or automatic opening and closing of switches that control or affect operations of a full engine digital engine control (FADEC) device (which is a device disposed with the engine that controls engine operations for engines of the aircraft). In some specific aspects, the selection is done through a programmable plug with push-pull pins that FADEC control software running on the FADEC device interprets to tune the engine thrust to an accurate target level. The FADEC device implements control software for engine.

In aspects, the FADEC device is a computer or other processing device that controls engine operations. For example, engine timing, the angle to set propellers or fan blades, when to open or close engine valves, and how much fuel goes into combustor of the engine may be controlled by the FADEC device to achieve an accurate takeoff thrust.

In one example, the predicted (target and calibrated and expected value of thrust) is 100 units (e.g., Newtons), but the actual measured value is 99 units. The settings of the FADEC device (set using, for example, switches or pins, which are manually or automatically set by a user) are read by the FADEC device (which is connected to the switches or pins) to set, change, or modify thrust settings of the engine. In one example, setting the pins in one particular combination might result in opening a valve of the unducted aircraft engine more or less. In further aspects, it has been determined ahead of time which pins or switches (or combinations of switches) to throw, set, and/or adjust to obtain a certain thrust. The settings of the pins or switches are read by the FADEC and the FADEC adjusts its operations accordingly to calibrate the full power thrust.

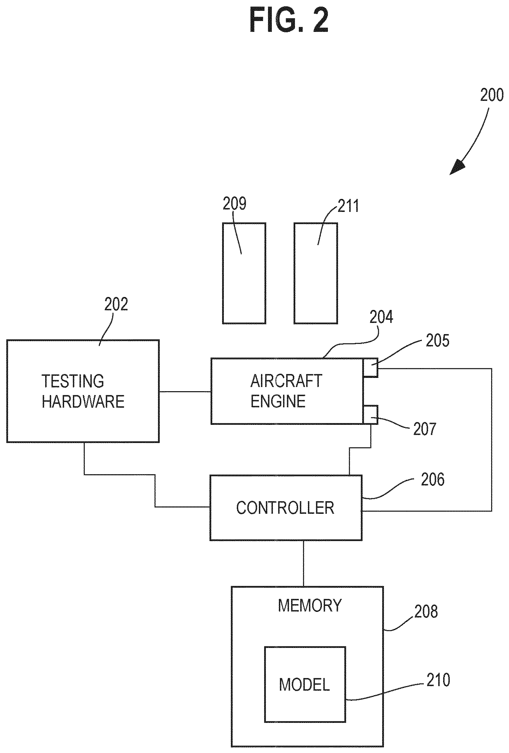

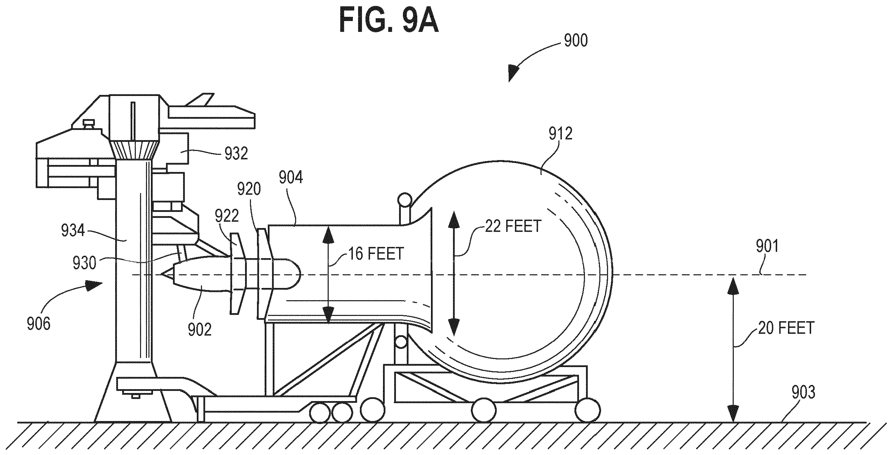

Referring now to FIG. 2, one example of a system 200 to perform engine ground testing includes testing hardware 202, an aircraft engine 204, a controller 206, a memory 208, and a model 210 stored in the memory 208. An engine control torque sensor 205 (e.g., that in some examples has been calibrated according to the process of step 104) and other engine sensors 207 (e.g., pressure, speed, or temperature, fuel flow, and variable system setting positions) are coupled to the controller 206 and the aircraft engine 204. In one example, the system of FIG. 2 is used to perform the testing described by step 106 of FIG. 1. Furthermore, the system and setup of FIG. 2 is one example. One example of an additional setup that is particularly applicable for unducted engines is described below with respect to FIGs. 9A-9F. It will be appreciated that the controller 206, the memory 208, and the model 210 may together be incorporated into a single electronic device such as a personal computer, laptop, smart phone or other similar device. Such an electronic device may be disposed at the location of ground testing or at some other location.

The testing hardware 202 may include testing stands, devices, structures, and/or other physical elements that support aircraft engine 204 during testing and/or simulate in-flight conditions for the aircraft engine 204. For example, these structures and devices enable the aircraft engine 204 to create air flow that impacts or flows about the aircraft engine 204 at in-flight velocities, other in-flight conditions (e.g., temperatures or pressures to mention two examples), or conditions that approach in-flight conditions as much as possible. In examples, the aircraft engine 204 and testing hardware 202 produces air velocities of .1 to .35 Mach, where Mach is the speed of sound.

In one example, a testing setup is used where the aircraft engine 204 is suspended above the ground and sensors are positioned about the aircraft engine 204 when the aircraft engine 204 is operated at full power. As mentioned and in aspects, the aircraft engine 204 is an unducted aircraft engine where additional testing hardware is needed to properly and adequately simulate in-flight air velocity (or as near to in-flight velocity as possible) applied to and flowing about the unducted aircraft engine. In some examples, this additional testing hardware comprises a duct, cowl or enclosure surrounding the front of the aircraft engine 204 where the cowl provides a structure allowing the aircraft engine 204 to suck air (in a movement towards the aircraft engine 204) and the air generally increases in speed as it nears the aircraft engine 204 so that the air is moving at in-flight or near in-flight velocity (e.g., .1 Mach to .35 Mach) when it strikes or arrives at the aircraft engine 204.

In other aspects, the testing hardware 204 enables, during ground testing, the speed and direction of the air to be the same or similar to the speed and direction of the air that would be impacting the engine during in-flight operations (e.g., when the aircraft is moving forward at .1 to .35 Mach). Examples of additional testing hardware are described with respect to FIGs. 8A-D, 9, 10, 11, and 12A-H below. In another example, industrial strength fans (arranged as a fan bank) can be used to produce air that is moving at in-flight velocities when it strikes or arrives at the aircraft engine 204.

The testing hardware 202 may be controlled by the controller 206 or controlled in part by the controller 206. For example, when the testing hardware 202 is used to create in-flight air flow velocity during the test (or as near to in flight velocities as possible), the controller 206 may control or operate the mechanisms (e.g., fans, ducts, or other structures) that create the appropriate testing conditions. In other examples, the testing hardware 202 does not need to be activated and/or controlled by the controller 206.

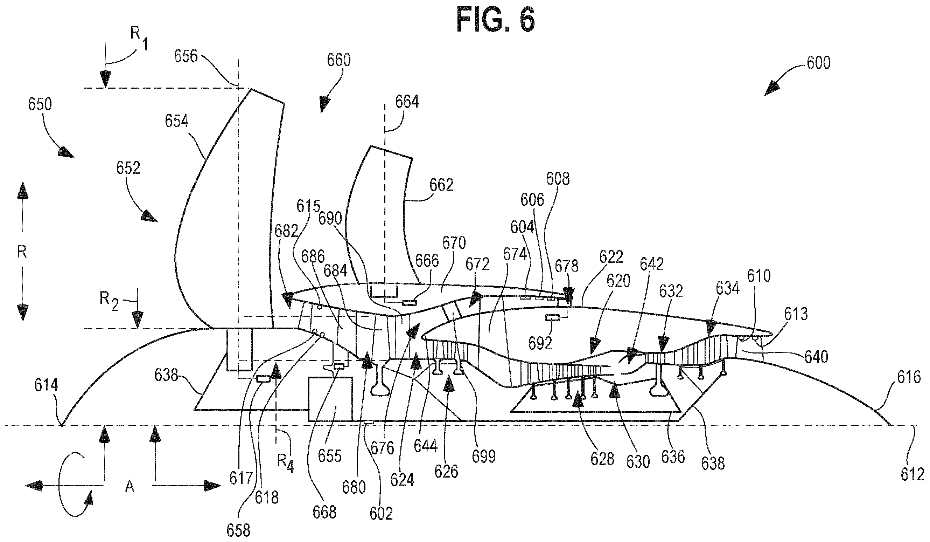

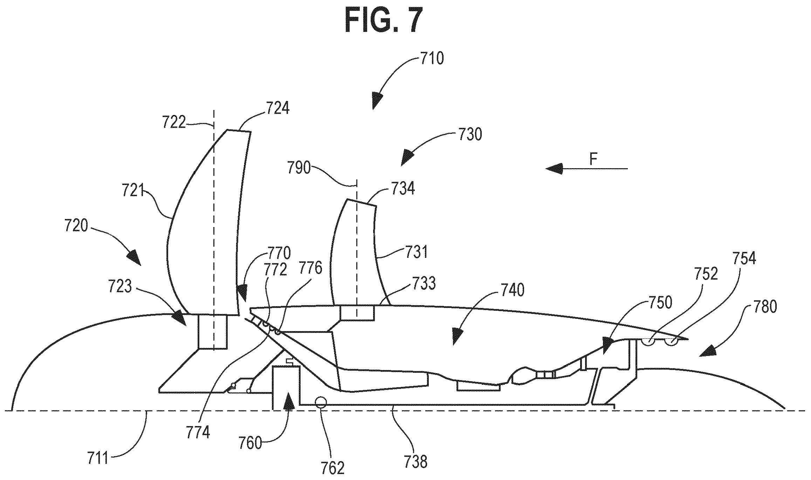

The aircraft engine 204 is an unducted aircraft engine such that the fan blades of the engine are not enclosed or covered by a cover or enclosure but are exposed to the outside environment. One example of an unducted aircraft engine is described below with respect to FIG. 6 and another with respect to FIG. 7.

The memory 208 is any type of electronic memory storage device. The memory 208 (and any of the memory devices described herein) can include any one or combination of volatile memory elements (e.g., random access memory (RAM), such as dynamic RAM (DRAM), static RAM (SRAM), synchronous dynamic RAM (SDRAM), video RAM (VRAM), and so forth) and/or nonvolatile memory elements (e.g., read only memory (ROM), hard drive, tape, CD-ROM, and so forth). Moreover, the memory may incorporate electronic, magnetic, optical, and/or other types of storage media. The memory 208 can also have a distributed architecture, where various components are situated remotely from one another, but can be accessed by the controller 206.

The model 210 is stored in the memory 208. The model 210 may be implemented in any format and may include information that describes the thrust or other operation characteristics of the aircraft engine 204. In examples, the model 210 is an electronic file and includes information concerning the test results. In other examples, the model 210 may include equations for the calculation of thrust. In still other examples, the model 210 may be a machine learning model (e.g., a neural network). The model 210 may be built into the controller 206.

As mentioned, the controller 206, memory 208, and model 210 may be disposed in a stand-alone electronics device. Alternatively, the controller 206, memory 208, and model 210 may be disposed on a device that is directly coupled to or at the aircraft engine 204. The controller 206 couples to the memory 208 and the testing hardware 202. It will be appreciated that as used herein the term "controller" refers broadly to any microcontroller, computer, or processor-based device with processor, memory, and programmable input/output peripherals, which is generally designed to govern the operation of other components and devices. It is further understood to include common accompanying accessory devices, including memory, transceivers for communication with other components and devices, etc. These architectural options are well known and understood in the art and require no further description here. The controller 206 may be configured (for example, by using corresponding programming stored in a memory as will be well understood by those skilled in the art) to carry out one or more of the steps, actions, and/or functions described herein. The controller 206 may include a memory that includes computer instructions that implement any of the functions described herein.

It should be understood that the controllers (e.g., the controller 206) provided herein may implement the various functionality described herein. In terms of hardware architecture, such a controller can include but is not limited to a processor, a memory, and one or more input and/or output (I/O) device interface(s) that are communicatively coupled via a local interface. The local interface can include, for example but not limited to, one or more buses and/or other wired or wireless connections. The controller 206 may be a hardware device for executing software, particularly software stored in a memory. The controller 206 can be a custom made or commercially available processor, a central processing unit (CPU), an auxiliary processor among several processors associated with the computing device, a semiconductor-based microprocessor (in the form of a microchip or chip set) or generally any device for executing software instructions.

The controller 206 may implement the functions described herein in any combination of hardware and software (e.g., with the software being executed by the controller 206). The software may be stored in any memory device and may include one or more separate programs, each of which includes an ordered listing of executable instructions for implementing the functions described herein. When constructed as a source program, the program is translated via a compiler, assembler, interpreter, or the like, which may or may not be included within the memory.

It will be appreciated that at least some portions of the approaches described herein can be implemented at least in part as computer instructions stored on a computer media (e.g., a computer memory as described above) and these instructions can be executed on a controller such as a microprocessor. However, as mentioned, these approaches can be implemented as any combination of electronic hardware and/or software.

In operation during the ground testing, the aircraft engine 204 is positioned on the ground test stand and testing is performed. One goal of the on-ground testing is to determine any residual errors or unaccounted for behaviors (whatever the source) in the aircraft engine 204. For a given set of parameters, the aircraft engine 204 is run (e.g., at full power) and torque and thrust are measured using the engine control torque sensor 205 and other engine sensors 207. For example, the other engine sensors 207 may include pressure, temperature, shaft speeds, and volumetric fuel meters can be used to evaluate core thrust and other thrust produced by other airstreams or exhaust streams produced by the aircraft engine 204.

When performing the ground test, testing the engine may occur on the ground in the open air (outside), or on an enclosed test cell disposed indoors. As mentioned and in another example, the aircraft engine 204 the engine test facility includes a structure with a wall. The wall has a hole or opening. The aircraft engine 204 is placed adjacent next to the hole or opening in the wall and the testing occurs. In this example, no special equipment is used. Alternatively, specifically designed hardware may also be used as described elsewhere herein.

In aspects, the thrust of the aircraft engine 204 is directly measured using redundant sensors 209 (e.g., strain gages). Environmental sensors 211 measure environmental parameters to fully correct the thrust and account for the environmental conditions. The environmental parameters may include wind direction, wind velocity, ambient temperature, ambient pressure, humidity, engine pressure in front of the propellors and engine exhaust pressures.

During the on the ground testing, the aircraft engine 204 is run at full power. By "full power," it is meant that the engine is run rated power levels at sea-level flight velocity conditions producing maximum net thrust for takeoff, maximum continuous, and maximum climb.

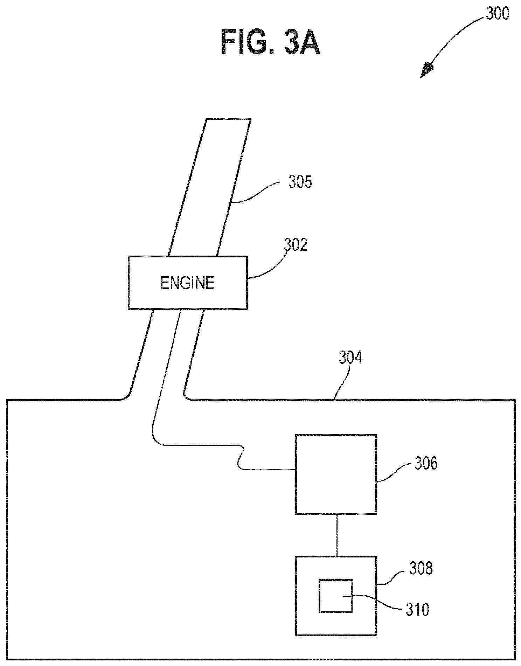

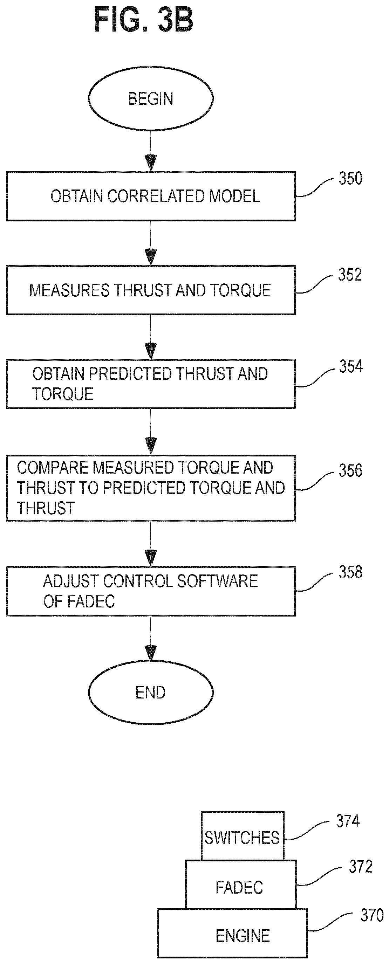

The sensed readings are compared (by a data reduction analysis program executed by the controller 206) to the thrust and torque predicted by the model 210. The differences can be considered errors and can be used by the controller 206 to create a modifier or modifiers (or other adjustment factors) that are used in the analytical model to accurately calculate thrust. Multiple modifiers may also be calculated or determined by the controller 206 based upon the operational state of the aircraft. For example, one modifier may be calculated for takeoff conditions, another modifier for idle conditions, and another modifier for cruising conditions. The modifiers are incorporated into the model 210 to form a correlated model of the aircraft engine 204. After the on-ground testing is finished, on-board (e.g., in-flight) testing is performed as described with respect to FIG. 3.

In one example, the model models torque as Torque = f1 (E, F, G), where E is a combustor pressure and F is a combustor temperature, and G is a fuel flow. In another example, the model models thrust as Thrust= f2 (A, B, C, D), where A is a propellor inlet pressure, B is a propellor shaft speed, C is a propellor blade pitch angle of a fan blade, and D is a fan guide vane angle. f1 and f2 are mathematical functions (that may be equations, sets of equations, or other constructs) that, when the input values (e.g., A, B, C, D, E, F, and G) are applied yield results (torque in the case of f1 and thrust in the case of f2). The exact equations, sets of equations used depends upon the nature of the engine being tested.

Accordingly, the model 210 can be used by the controller 206 to calculate a predicted torque and predicted thrust using the measured parameters A, B. C, D, E, F and G and applying the parameters to the functions f1 and f2. Torque and thrust are then measured directly from the engine (by appropriate sensors or measurement devices at or in the aircraft engine 204) and compared by the controller 206 to predicted thrust and torque.

In aspects, a manual (or in some examples, an automatic) process is used to determine or decide whether to apply a modifier (and the value of the modifier) to the measured A, B. C, D, E, F, or G components of the model. The determination might be based on previous experience or historic data, reliability and known accuracy of the sensors measuring the A, B, C, D, E, F, and G values. For example, a particular type of sensor might be known for having inaccurate values, so a modifier might be added to adjust values received from this type of sensor and thereby account for and compensate for these inaccuracies. The value of the modifier, in this example, might be chosen based upon a known amount of the inaccuracy.

If the process is a manual process, then results of the comparison may be presented to a user or operator at a user interface (e.g., computer or smartphone). The user or operator can then determine whether to apply a modifier or modifiers to the model and, more specifically, to the measured A, B. C, D, E, F, or G components of the model. If the process is automatic, the controller 206 may analyze the results of the comparison and determine whether to apply one or more modifiers to the measured A, B. C, D, E, F, or G components of the model.

Referring now to FIG. 3A, one example of a system 300 to perform the on-board (e.g., in-flight) testing is described. An aircraft engine 302 (e.g., an unducted aircraft engine) is positioned on-board an aircraft 304 (such as on a wing 305 of the aircraft). A controller 306 is coupled to a memory 308 and the aircraft engine 302 (and sensors on the aircraft engine 302). The memory 308 includes a correlated model 310. The controller 306 and the memory 308 may be devices already existing aboard the aircraft 304 or may be only temporarily installed aboard the aircraft 304 for the on-board testing. In other examples, the controller 306 and the memory 308 may be incorporated into a testing device (e.g., a laptop or smart phone) that can be carried aboard the aircraft 304. In aspects, the controller 306, the memory 308, and the correlated model 310 comprise data reduction tool. Numerical propulsion system simulation (NPSS) software is one example of a data reduction tool that can be used.

The controller 306, the memory 308, and the correlated model 310 may be disposed in an electronic device such as a personal computer, laptop, or smart phone. This device may be in the aircraft 304, or alternatively on the ground.

The aircraft 304 is any type of aircraft. In aspects, the aircraft engine 302 is an unducted aircraft engine such that the bypass fan is not enclosed within a nacelle or fan duct. Examples of unducted aircraft engines are described below with respect to FIG. 6 and FIG. 7.

The memory 308 is any type of electronic memory storage device. The correlated model 310 includes or incorporates modifiers and can be obtained from the process described with respect to FIG. 2.

During this on-board test, the correlated model 310 is utilized by the controller 306 to calculate thrust. Readings from sensors on the aircraft engine 302 can be sent to the controller 306, where thrust can be calculated.

In one example, the aircraft engine 302 creates or has three air or exhaust streams producing thrust. Thrust X is the propeller thrust modeled using the correlated model, which includes the modifiers obtained during ground testing. Thrust Y may be from an air stream flowing through the engine core and Thrust Z is from a "third" stream around the core but still in the engine. The total calibrated thrust is Thrust = Thrust X + Thrust Y +Thrust Z. In aspects, the thrust in the X stream is calculated using the correlated model 310 by the controller 306. Thrust Y and Thrust Z can be calculated by the controller 306 using readings from other aircraft and engine sensors to determine the thrust produced by these other streams. The controller 306 can then sum the thrust components to obtain the total calibrated thrust.

Once the total calibrated thrust is determined, it can be compared to ratings or needs that are required by an aircraft manufacturer or operator. For example, the total calibrated thrust may be below the rated thrust for the aircraft 304. Consequently, selected equipment, parts, or components in the aircraft 304 or aircraft engine 302 can be examined, and adjustments made to these devices to thereby adjust the thrust (e.g., increase the thrust) provided by the aircraft engine 302 to the aircraft 304.

Referring now to FIG. 3B, one example of an approach for testing production engines is described.

At step 350, a correlated analytical model of an unducted aircraft engine (e.g., obtained using the process associated with step 106 of FIG. 1). The unducted aircraft engine includes an engine control torque sensor. The unducted aircraft engine is run at full power during a ground test. Full power is the power of the engine required at takeoff of the aircraft. The unducted aircraft engine is tested using testing hardware that simulates at least some flight-like or operational conditions for the unducted aircraft engine during the ground test.

A production unducted aircraft engine 370 is being manufactured. The production unducted aircraft engine 370 include a FADEC device 372 disposed at the production unducted aircraft engine 370 that controls operations of the production unducted aircraft engine 370. Pins or switches 374 are coupled to the FADEC device 372. The settings of the pins or switches 374 are read or sensed by the FADEC device 372.

The FADEC device 372 implements control software for production unducted aircraft engine 370. The settings of the pins or switches 374 adjust or control the operation of the control software. In aspects, the FADEC device 372 is a computer or other processing device that controls engine operations. For example, engine timing, the angle to set propellers or fan blades, when to open or close engine valves, and how much fuel goes into combustor of the production unducted aircraft engine 370 may be controlled by the FADEC device 372.

At step 352, the thrust of the production unducted aircraft engine 370 is directly measured during the ground test to obtain a measured thrust. The torque of the production unducted aircraft engine 370 is measured during the ground test using an engine control torque sensor of the production unducted aircraft engine 370 to obtain a measured torque. The measurements may be obtained as described elsewhere herein.

At step 354, a predicted torque and a predicted thrust of the production unducted aircraft engine 370 are obtained using the correlated analytical model. At step 356, the measured torque is compared to the predicted torque and the measured thrust is compared to the predicted thrust to obtain comparison results. Steps 354 and 356 may be performed by a personal computer, laptop, smartphone or similar electronic device.

At step 358 and based upon the comparison results, the control software for the production unducted aircraft engine is selectively adjusted. This adjustment may include the manually or automatic opening and closing of pins or switches 374 that control or affect operations of the FADEC device 372. The process of FIG. 3B can be performed on all or only a selected group of production engines.

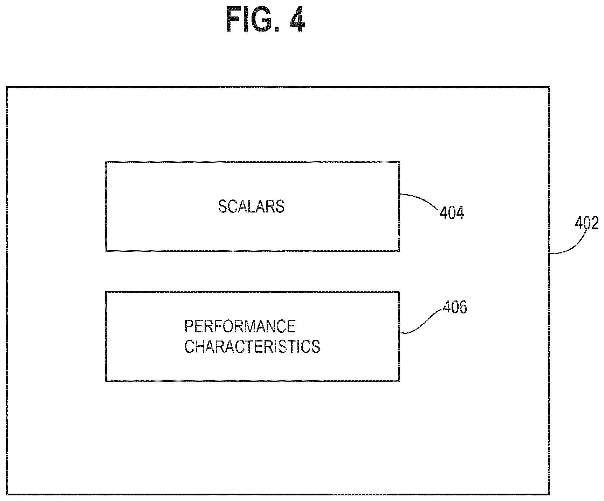

Referring now to FIG. 4, one example of a correlated model 402 is described. The correlated model 402 may be in the form of an electronic file (e.g., including data, equations, etc.), one or more equations, and/or may be a machine learning model (e.g., a neural network) with various layers, weightings, and other structures to mention a few examples.

The correlated model 402 may model performance of an aircraft engine (e.g., an unducted aircraft engine) that has been ground tested (e.g., using the process described with respect to FIG. 2). In one example, the correlated model 402 is an electronic file that includes modifiers 404 and engine performance characteristics 406. In another example, the correlated model 402 is a structure (e.g., a machine learning model such as a neural network) that receives certain inputs and produces a thrust as the output. In this case, the machine learning model may be trained at least in part according to the modifiers 404 and engine performance characteristics 406 to produce a calibrated thrust (or potentially other parameters).

As mentioned, the correlated model 402 includes or incorporates the modifiers 404. In one example, the modifiers 404 are determined according to the approaches described with respect to step 106 of FIG. 1 and the approaches described with respect to FIG. 2.

A variety of modifiers may be calculated based upon the operational state of the aircraft and all of these modifiers 404 incorporated into the correlated model 402. For example, one modifier may be calculated for takeoff conditions, another modifier for idle conditions, and yet another modifier for cruising conditions. The modifiers 404 are incorporated into the correlated model 402 to form a correlated model describing the performance of the engine.

The modifiers 404 may also be correlated or associated with specific sensors represented by the model. For example, one modifier (e.g., an adder) may be associated with a speed sensor. When associated with the speed sensor, the correlated model 402 will indicate that speed readings obtained from that sensor should have their readings modified by the adder by adding the value of the adder to these readings.

In another example, the measurements are not directly modified. Other portions of the analytic engine behavior are adjusted to bring the correlated model 402 into calibration with the measurements. For example, if originally the Thrust is modeled by the correlated model 402 to be Thrust = A+B (where A and B are sensor measurements values), then the modeled thrust can be adjusted to be Thrust = (A+B)/M) (where A and B are sensor measurements and M is a numeric modifier).

The correlated model 402 also includes or incorporates the engine performance characteristics 406. For a particular power applied to the fan blades or the propeller, a particular pitch angle of the propeller, and/or other parameters, the engine performance characteristics 406 describe how much thrust will be provided by the propeller and the efficiency of the engine.

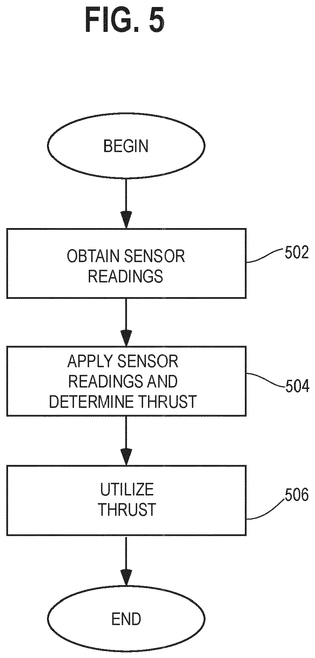

Referring now to FIG. 5, one example of implementing the aircraft testing phase of an aircraft engine is described. In one example, the approach of FIG. 5 implements step 108 of FIG. 1.

At step 502, sensor readings from sensors in or at the aircraft engine are obtained. A pressure sensor at the aircraft engine may measure pressure. A temperature sensor at the aircraft engine may measure temperature. An engine shaft speed sensor at the aircraft engine may measure engine speed. The calibrated engine control torque sensor at the aircraft engine measures a highly accurate torque. As mentioned, the pressure sensor, the engine shaft speed sensor, and the calibrated engine control torque sensor are deployed in or at the aircraft engine.

At step 504, the sensor readings are applied and/or utilized with a correlated model to obtain, calculate or determine a thrust for the aircraft. In one example, power, rpm, angle, and torque can be measured to determine thrust. The thrust determination can be performed by a controller that is deployed at a personal computer, laptop, or smart phone in or at the aircraft that is being tested. In another example, the controller may be deployed at devices (e.g., personal computers, laptops, or smartphones) on the ground (not in the aircraft) and a wireless communication system may communicate the readings of the sensors to the controller in the on-the-ground devices.

At step 506, the determined thrust can be utilized for various purposes. The determined thrust can be compared to desired thrust. For example, a desired thrust rating may be provided by an aircraft engine manufacturer and this can be compared to the determined thrust.

Adjustments to the engine can then be made knowing that the above-mentioned process has been utilized to produce highly accurate thrust calculations. For example, different engine components may be inspected, maintained, monitored, replaced, and/or adjusted to increase (or decrease) the thrust of the engine based upon the results of the comparison. The inspection, maintenance, monitoring, repair, and/or adjustment, in aspects, modifies the operation of the engine and, in some instances, brings the engine's operating characteristics (e.g., thrust) to desired values. In one example, the FADEC device control schedule can be adjusted.

Referring now to FIG. 6, one example of an engine used in these approaches is described. The technology described with respect to the engine of FIG. 6 relates to an unducted propulsion system, particularly the shape an external surface of one or more housings encasing a propulsion system, for which housings can be comprised of a spinner, hub and/or nacelle. It will be appreciated that the engine architecture of FIG. 6 is one example and that other examples are possible.

A turbofan engine operates on the principle that a central gas turbine core drives a bypass fan, the fan being located at a radial location between a fan duct and the engine core. An unducted propulsion system instead operates on the principle of having the bypass fan located outside of the engine nacelle. This permits the use of larger fan blades able to act upon a larger volume of air than for a turbofan engine, and thereby improves propulsive efficiency over conventional engine designs.

Unducted propulsion systems may take the form of a propeller system, as used on a wide range of aircraft, e.g., radio-controlled model airplanes, drones, piston engine propeller aircraft, turboprop regional aircraft, and large turboprop military transports. Another type of unducted propulsion system, sometimes referred to as "open rotor", consists of two blade assemblies, one in a forward position and one in an aft position, in which at least one of them rotates about an axis to deliver power to the propulsive stream that generates thrust. Such two blade assembly systems offer some advantages, but also some challenges and are far less common than single blade row systems. As used herein, the term "propeller" may refer to the single blade assembly of an unducted propulsion system or the forward blade assembly of an unducted propulsion system comprised of two blade assemblies. The term "fan" may refer to the either a propeller or both blade assemblies of an unducted propulsion system.

In FIG. 6, a schematic cross-sectional view of a gas turbine engine is provided and this type of engine can be utilized in any of the approaches or as any of the engines described herein. Particularly, FIG. 6 provides an engine having a rotor assembly with a single stage of unducted rotor blades. In such a manner, the rotor assembly may be referred to herein as an "unducted fan," or the entire engine 600 may be referred to as an "unducted aircraft engine." In addition, the engine of FIG. 6 includes a third stream extending from the compressor section to a rotor assembly flow path over the turbomachine, as will be explained in more detail below.

For reference, the engine 600 defines an axial direction A, a radial direction R, and a circumferential direction C. Moreover, the engine 600 defines an axial centerline or longitudinal axis 612 that extends along the axial direction A. In general, the axial direction A extends parallel to the longitudinal axis 612, the radial direction R extends outward from and inward to the longitudinal axis 612 in a direction orthogonal to the axial direction A, and the circumferential direction extends three hundred sixty degrees (360°) around the longitudinal axis 612. The engine 600 extends between a forward end 614 and an aft end 616, e.g., along the axial direction A.

The engine 600 includes a turbomachine 620 and a rotor assembly, also referred to a fan section 650, positioned upstream thereof. Generally, the turbomachine 620 includes, in serial flow order, a compressor section, a combustion section, a turbine section, and an exhaust section. Particularly, as shown in FIG. 6, the turbomachine 620 includes a core cowl 622 that defines an annular core inlet 624. The core cowl 622 further encloses at least in part a low-pressure system and a high-pressure system. For example, the core cowl 622 depicted encloses and supports at least in part a booster or low pressure ("LP") compressor 626 for pressurizing the air that enters the turbomachine 620 through the annular core inlet 624. A high pressure ("HP"), multi-stage, axial-flow compressor 628 receives pressurized air from the LP compressor 626 and further increases the pressure of the air. The pressurized air stream flows downstream to a combustor 630 of the combustion section where fuel is injected into the pressurized air stream and ignited to raise the temperature and energy level of the pressurized air.

It will be appreciated that as used herein, the terms "high/low speed" and "high/low pressure" are used with respect to the high pressure/high speed system and low pressure/low speed system interchangeably. Further, it will be appreciated that the terms "high" and "low" are used in this same context to distinguish the two systems and are not meant to imply any absolute speed and/or pressure values.

The high energy combustion products flow from the combustor 630 downstream to a high-pressure turbine 632. The high-pressure turbine 632 drives the HP compressor 628 through a high-pressure shaft 636. In this regard, the high-pressure turbine 632 is drivingly coupled with the HP compressor 628. The high energy combustion products then flow to a low-pressure turbine 634. The low-pressure turbine 634 drives the LP compressor 626 and components of the fan section 650 through a low-pressure shaft 638. In this regard, the low-pressure turbine 634 is drivingly coupled with the LP compressor 626 and components of the fan section 650. The LP shaft 638 is coaxial with the HP shaft 636 in this example embodiment. After driving each of the turbines 632, 634, the combustion products exit the turbomachine 620 through a turbomachine exhaust nozzle 640.

Accordingly, the turbomachine 620 defines a working gas flow path or core duct 642 that extends between the annular core inlet 624 and the turbomachine exhaust nozzle 640. The core duct 642 is an annular duct positioned generally inward of the core cowl 622 along the radial direction R. The core duct 642 (e.g., the working gas flow path through the turbomachine 620) may be referred to as a second stream.

The fan section 650 includes a fan 652, which is the primary fan in this example embodiment. For the depicted embodiment of FIG. 6, the fan 652 is an open rotor or unducted fan. As depicted, the fan 652 includes an array of fan blades 654 (only one shown in FIG. 6). The fan blades 654 are rotatable, e.g., about the longitudinal axis 612. As noted above, the fan 652 is drivingly coupled with the low-pressure turbine 634 via the LP shaft 638. For the embodiments shown in FIG. 6, the fan 652 is coupled with the LP shaft 638 via a speed reduction gearbox 655, e.g., in an indirect-drive or geared-drive configuration.

Moreover, the fan blades 654 can be arranged in equal spacing around the longitudinal axis 612. Each blade 654 has a root and a tip and a span defined therebetween.

Moreover, each blade 654 defines a central blade axis 656. For this embodiment, each blade 654 of the fan 652 is rotatable about their respective central blades axes 656, e.g., in unison with one another. One or more actuators 658 are provided to facilitate such rotation and therefore may be used to change a pitch the blades 654 about their respective central blades axes 656.

The fan section 650 further includes a fan guide vane array 660 that includes fan guide vanes 662 (only one shown in FIG. 6) disposed around the longitudinal axis 612. For this embodiment, the fan guide vanes 662 are not rotatable about the longitudinal axis 612. Each fan guide vane 662 has a root and a tip and a span defined therebetween. The fan guide vanes 662 may be unshrouded as shown in FIG. 6 or, alternatively, may be shrouded, e.g., by an annular shroud spaced outward from the tips of the fan guide vanes 662 along the radial direction R or attached to the fan guide vanes 662.

Each fan guide vane 662 defines a central blade axis 664. For this embodiment, each fan guide vane 662 of the fan guide vane array 660 is rotatable about their respective central blades axes 664, e.g., in unison with one another. One or more actuators 666 are provided to facilitate such rotation and therefore may be used to change a pitch of the fan guide vane 662 about their respective central blades axes 664. However, in other embodiments, each fan guide vane 662 may be fixed or unable to be pitched about its central blade axis 664. The fan guide vanes 662 are mounted to a fan cowl 670.

As shown in FIG. 6, in addition to the fan 652, which is unducted, a ducted fan 684 is included aft of the fan 652, such that the engine 600 includes both a ducted and an unducted fan which both serve to generate thrust through the movement of air without passage through at least a portion of the turbomachine 620 (e.g., without passage through the HP compressor 628 and combustion section for the embodiment depicted). The ducted fan is rotatable at about the same axis as the fan blade 654. The ducted fan 684 is, for the embodiment depicted, driven by the low-pressure turbine 634 (e.g., coupled to the LP shaft 638). In the embodiment depicted, as noted above, the fan 652 may be referred to as the primary fan, and the ducted fan 684 may be referred to as a secondary fan. It will be appreciated that these terms "primary" and "secondary" are terms of convenience, and do not imply any particular importance, power, or the like.

The ducted fan 684 includes a plurality of fan blades (not separately labeled in FIG. 6). The fan blades of the ducted fan 684 can be arranged in equal spacing around the longitudinal axis 612. Each blade of the ducted fan 684 has a root and a tip and a span defined therebetween.

The fan cowl 670 annularly encases at least a portion of the core cowl 622 and is generally positioned outward of at least a portion of the core cowl 622 along the radial direction R. Particularly, a downstream section of the fan cowl 670 extends over a forward portion of the core cowl 622 to define a fan flow path or fan duct 672. According to this aspect, the fan flow path or fan duct 672 may be understood as forming at least a portion of the third stream of the engine 600.

Incoming air may enter through the fan duct 672 through a fan duct inlet 676 and may exit through a fan exhaust nozzle 678 to produce propulsive thrust. The fan duct 672 is an annular duct positioned generally outward of the core duct 642 along the radial direction R. The fan cowl 670 and the core cowl 622 are connected together and supported by a plurality of substantially radially extending, circumferentially spaced stationary struts 674 (only one shown in FIG. 6). The stationary struts 674 may each be aerodynamically contoured to direct air flowing thereby. Other struts in addition to the stationary struts 674 may be used to connect and support the fan cowl 670 and/or core cowl 622. In many embodiments, the fan duct 672 and the core duct 642 may at least partially co-extend (generally axially) on opposite sides (e.g., opposite radial sides) of the core cowl 622. For example, the fan duct 672 and the core duct 642 may each extend directly from the leading edge 644 of the core cowl 622 and may partially co-extend generally axially on opposite radial sides of the core cowl.

The engine 600 also defines or includes an inlet duct 680. The inlet duct 680 extends between an engine inlet 682 and the core inlet 624/fan duct inlet 676. The engine inlet 682 is defined generally at the forward end of the fan cowl 670 and is positioned between the fan 652 and the fan guide vane array 660 along the axial direction A. The inlet duct 680 is an annular duct that is positioned inward of the fan cowl 670 along the radial direction R. Air flowing downstream along the inlet duct 680 is split, not necessarily evenly, into the core duct 642 and the fan duct 672 by a splitter or leading edge 644 of the core cowl 622. The inlet duct 680 is wider than the core duct 642 along the radial direction R. The inlet duct 680 is also wider than the fan duct 672 along the radial direction R.

During operation of the engine 600 at an operating condition, the engine 600 generates a total thrust, FnTotal. The operating condition may be operation of the engine 600 at a rated speed during standard day operating condition. The total thrust is a sum of a first stream thrust, Fn1S (e.g., a primary fan thrust generated by an airflow over the fan cowl 670 and core cowl 622, generated by the fan 652), a third stream thrust, Fn3S (e.g., a thrust generated by an airflow through the fan duct 672 exiting through the fan exhaust nozzle 678, generated at least in part by the ducted fan 684), and a second stream thrust, Fn2S (e.g., a thrust generated by an airflow through the core duct 642 exiting through the turbomachine exhaust nozzle 640).

Notably, for the embodiment depicted, the engine 600 includes one or more features to increase an efficiency of the third-stream thrust, Fn3S. In particular, the engine 600 further includes an array of inlet guide vanes 686 positioned in the inlet duct 680 upstream of the ducted fan 684 and downstream of the engine inlet 682. The array of inlet guide vanes 686 are arranged around the longitudinal axis 612. For this embodiment, the fan inlet guide vanes 686 are not rotatable about the longitudinal axis 612. Each inlet guide vanes 686 defines a central blade axis (not labeled for clarity), and is rotatable about their respective central blade axes, e.g., in unison with one another. One or more actuators 668 are provided to facilitate such rotation and therefore may be used to change a pitch of the inlet guide vanes 686 about their respective central blades axes. However, in other embodiments, each inlet guide vanes 686 may be fixed or unable to be pitched about its central blade axis.

Further, located downstream of the ducted fan 684 and upstream of the fan duct inlet 676, the engine 600 includes an array of outlet guide vanes 690. As with the array of inlet guide vanes 686, the array of outlet guide vanes 690 are not rotatable about the longitudinal axis 612. However, for the embodiment depicted, unlike the array of inlet guide vanes 686, the array of outlet guide vanes 690 are configured as fixed-pitch outlet guide vanes.

Further, it will be appreciated that for the embodiment depicted, the fan exhaust nozzle 678 of the fan duct 672 is further configured as a variable geometry exhaust nozzle. In such a manner, the engine 600 includes one or more actuators 692 for modulating the variable geometry exhaust nozzle. For example, the variable geometry exhaust nozzle may be configured to vary a total cross-sectional area (e.g., an area of the nozzle in a plane perpendicular to the longitudinal axis 612) to modulate an amount of thrust generated based on one or more engine operating conditions (e.g., temperature, pressure, mass flowrate, etc. of an airflow through the fan duct 672). A fixed geometry exhaust nozzle may also be adopted.

The combination of the array of inlet guide vanes 686 located upstream of the ducted fan 684, the array of outlet guide vanes 690 located downstream of the ducted fan 684, and the exhaust nozzle 678 may result in a more efficient generation of third-stream thrust, Fn3S, during one or more engine operating conditions. Further, by introducing a variability in the geometry of the inlet guide vanes 686 and the exhaust nozzle 678, the engine 600 may be capable of generating more efficient third-stream thrust, Fn3S, across a relatively wide array of engine operating conditions, including takeoff and climb (where a maximum total engine thrust FnTotal, is generally needed) as well as cruise (where a lesser amount of total engine thrust, FnTotal, is generally needed).

Referring still to FIG. 6, air passing through the fan duct 672 may be relatively cooler (e.g., lower temperature) than one or more fluids utilized in the turbomachine 620. In this way, one or more heat exchangers 699 may be positioned in thermal communication with the fan duct 672. For example, one or more heat exchangers 699 may be disposed within the fan duct 672 and utilized to cool one or more fluids from the core engine with the air passing through the fan duct 672, as a resource for removing heat from a fluid, e.g., compressor bleed air, oil or fuel.

Various sensors are shown in FIG. 6. Measurements from these sensors are utilized during ground and/or in-flight testing as has been described elsewhere herein. These sensors are coupled to a controller (e.g., the controller 206 or controller 306).

For example, an engine control torque sensor 602 is coupled to the LP shaft 638 to measure torque. At the exit through the fan exhaust nozzle 678, a first pressure sensor 604 (measuring total pressure), a second pressure sensor 606 (measuring static pressure), and a first temperature sensor 608 (measuring total temperature) are deployed. At the turbomachine exhaust nozzle 640, a third pressure sensor 610 (measuring total pressure) and a second temperature sensor 613 (measuring total temperature) are deployed. At the engine inlet 682, a fourth pressure sensor 615 (measuring total pressure), a fifth pressure sensor 617 (measuring static pressure), and a third temperature sensor 618 (measuring total temperature) are deployed. It will be appreciated that other sensors may be deployed at other locations and the sensors can be of the types described or other types.

Referring now to FIG. 7, another example of an engine that can be utilized in these approaches is described. FIG.7 shows an elevational cross-sectional view of an exemplary embodiment of an unducted thrust producing system 710. It will be appreciated that the engine architecture of FIG. 7 is one example and that other examples are possible.

As is seen from FIG. 7, the unducted thrust producing system 710 takes the form of an open rotor propulsion system and has a rotating fan blade assembly 720 depicted as a propeller assembly which includes an array of airfoil blades 721 around a central longitudinal axis 711 of the unducted thrust producing system 710. The airfoil blades 721 are arranged in typically equally spaced relation around the central longitudinal axis 711, and each of the airfoil blades 721 has a root 723 and a tip 724 and a span defined therebetween. An axis 722 extends outwardly from the root 723, which is centered about the axis 722. Unducted thrust producing system 710 includes a gas turbine engine having a gas generator 740 and a low-pressure turbine 750. Left- or right- handed engine configurations can be achieved by mirroring the airfoils of 721, 731, and within the low-pressure turbine 750. As an alternative, an optional reversing gearbox (located in or behind the low-pressure turbine 750 or combined or associated with power gearbox 760) permits a common gas generator and low-pressure turbine to be used to rotate the fan blades either clockwise or counterclockwise, i.e., to provide either left- or right-handed configurations, as desired, such as to provide a pair of oppositely rotating engine assemblies as may be desired for certain aircraft installations. Unducted thrust producing system 710 in the embodiment shown in FIG. 7 also includes an integral drive (power gearbox 760) which may include a gearset for decreasing the rotational speed of the propeller assembly relative to the low-pressure turbine 750.

Unducted thrust producing system 710 also includes in the exemplary embodiment a non-rotating stationary element 730 which includes an array of vanes 731 also disposed around central longitudinal axis 711, and each vane 731 has a root 733 and a tip 734 and a span defined therebetween. These vanes may be arranged such that they are not all equidistant from the rotating assembly and may optionally include an annular shroud or duct distally from the central longitudinal axis 711 or may be unshrouded. These vanes are mounted to a stationary frame and do not rotate relative to the central longitudinal axis 711 but may include a mechanism for adjusting their orientation relative to their axis 790 and/or relative to the airfoil blades 721. For reference purposes, FIG. 7 also depicts a Forward direction denoted with arrow F, which in turn defines the forward and aft portions of the system. As shown in FIG. 7, the rotating element (in this case fan blade assembly 720) is located forward of the gas generator 740 in a "puller" configuration, and the exhaust 780 is located aft of the non-rotating stationary element 730. In addition to the noise reduction benefit, the duct provides a benefit for vibratory response and structural integrity of the stationary vanes 731 by coupling them into an assembly forming an annular ring or one or more circumferential sectors, i.e., segments forming portions of an annular ring linking two or more vanes 731 such as pairs forming doublets. The duct may allow the pitch of the vanes to be varied as desired.

A significant, perhaps even dominant, portion of the noise generated by the disclosed fan concept is associated with the interaction between wakes and turbulent flow generated by the upstream blade-row and its acceleration and impingement on the downstream blade-row surfaces. By introducing a partial duct acting as a shroud over the stationary vanes, the noise generated at the vane surface can be shielded to effectively create a shadow zone in the far field thereby reducing overall annoyance. As the duct is increased in axial length, the efficiency of acoustic radiation through the duct is further affected by the phenomenon of acoustic cut-off, which can be employed, as it is for conventional aircraft engines, to limit the sound radiating into the far- field. Furthermore, the introduction of the shroud allows for the opportunity to integrate acoustic treatment as it is currently done for conventional aircraft engines to attenuate sound as it reflects or otherwise interacts with the liner. By introducing acoustically treated surfaces on both the interior side of the shroud and the hub surfaces upstream and downstream of the stationary vanes, multiple reflections of acoustic waves emanating from the stationary vanes can be substantially attenuated.

In operation, the rotating airfoil blades 721 are driven by the low-pressure turbine via gearbox 760 such that they rotate around the central longitudinal axis 711 and generate thrust to propel the unducted thrust producing system 710, and hence an aircraft to which it is associated, in the forward direction F.

It may be desirable that either or both of the sets of blades 721 and vanes 731 incorporate a pitch change mechanism such that the blades can be rotated with respect to an axis of pitch rotation either independently or in conjunction with one another. Such pitch change can be utilized to vary thrust and/or swirl effects under various operating conditions, including to provide a thrust reversing feature which may be useful in certain operating conditions such as upon landing an aircraft.

Vanes 731 are sized, shaped, and configured to impart a counteracting swirl to the fluid so that in a downstream direction aft of both rows of blades the fluid has a greatly reduced degree of swirl, which translates to an increased level of induced efficiency. Vanes 731 may have a shorter span than airfoil blades 721, as shown in FIG. 7, for example, 50% of the span of airfoil blades 721, or may have longer span or the same span as airfoil blades 721 as desired. Vanes 731 may be attached to an aircraft structure associated with the propulsion system, as shown in FIG. 7, or another aircraft structure such as a wing, pylon, or fuselage. Vanes 731 of the stationary element may be fewer or greater in number than, or the same in number as, the number of airfoil blades 721 of the rotating element and typically greater than two, or greater than four, in number.

In the embodiment shown in FIG. 7, an annular 360-degree inlet 770 is located between the fan blade assembly 720 and the fixed or non-rotating stationary element 730 and provides a path for incoming atmospheric air to enter the gas generator 740 radially inwardly of the non-rotating stationary element 730. Such a location may be advantageous for a variety of reasons, including management of icing performance as well as protecting the annular 360-degree inlet 770 from various objects and materials as may be encountered in operation.

FIG. 7 illustrate what may be termed a "puller" configuration where the thrust-generating rotating element (in this case fan blade assembly 720) is located forward of the gas generator 740. The selection of "puller" or "pusher" configurations may be made in concert with the selection of mounting orientations with respect to the airframe of the intended aircraft application, and some may be structurally or operationally advantageous depending upon whether the mounting location and orientation are wing-mounted, fuselage-mounted, or tail-mounted configurations.

Various sensors are shown in FIG. 7. Measurements from these sensors are utilized during ground and/or in-flight testing as has been described elsewhere herein. In aspects, these sensors are coupled to a controller (e.g., the controller 206 or controller 306).

For example, an engine control torque sensor 762 is coupled to an engine shaft 738 (e.g., an LP shaft) to measure torque. At the exit through the exhaust 780, a first pressure sensor 752 (measuring total pressure) and a first temperature sensor 754 (measuring total temperature) are deployed. At the annular 360-degree inlet 770, a second pressure sensor 772 (measuring total pressure), a third pressure sensor 774 (measuring static pressure), and a second temperature sensor 776 (measuring total temperature) are deployed. It will be appreciated that other sensors may be deployed at other locations and the sensors can be of the types described or other types.

As described elsewhere herein, the unducted aircraft engine undergoes testing on the ground using testing hardware. The testing hardware can take a variety of different forms. Some additional examples of the testing hardware are now described with respect to FIGs. 8A-D, 9, 10, 11, and 12A-H. The approaches described with these figures relate to on-ground testing, for example, as described with respect to step 106 of FIG. 1 and the approach described with respect to FIG. 2. The approaches described with respect to FIGs. 8A-D, 9, 10, 11, and 12A-H are particularly applicable to the on-ground testing of unducted engines. It will be appreciated that other examples of testing hardware can also be used.

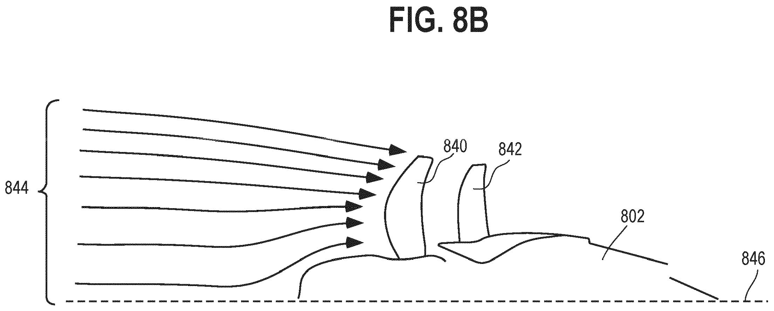

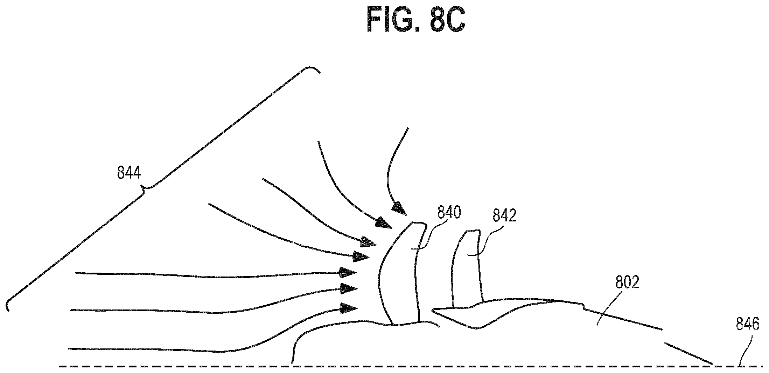

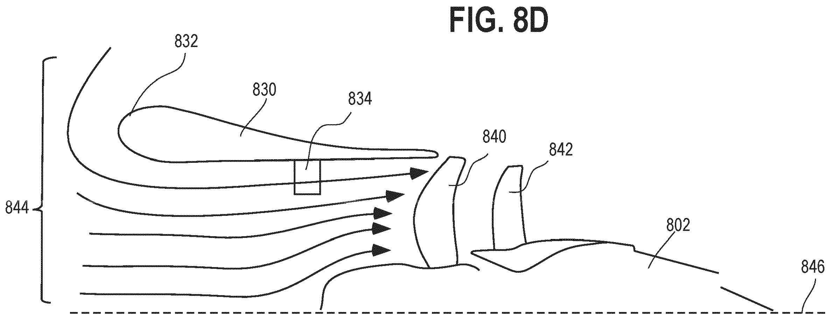

Referring now to FIG. 8A, one example of a system 800 for testing an unducted aircraft engine on the ground is described. The system 800 includes an unducted aircraft engine 802 and testing hardware 804. The unducted aircraft engine 802 is supported, held, and/or secured by a supporting structure 806 that includes one or more arms 808. The testing hardware 804 rests on a stand or support 810. In aspects, the supporting structure 806 and the one or more arms 808 allow the unducted aircraft engine 802 to hang as the unducted aircraft engine 802 would hang from an aircraft (e.g., from the wing of an aircraft) during flight. The arrangement of FIG. 8 is positioned on the ground 803.

As shown in FIG. 8A, the testing hardware 804 is generally positioned in an upstream direction 812 upstream of the unducted aircraft engine 802 and the fan blades of the unducted aircraft engine 802. A downstream direction 814 is shown as being opposite the upstream direction 812. It will be appreciated that although at least some of the testing hardware 804 is upstream of the fan blades of the unducted aircraft engine 802, some of the structures of the testing hardware 804 can extend in the downstream direction 814. During testing, air flows generally from the upstream direction 812 to the downstream direction 814 in the opposite direction to the arrow labeled 815.

The unducted aircraft engine 802 is an unducted engine in that its fan blades and/or propellers are not surrounded by a duct as in a turbofan engine. In aspects, the unducted aircraft engine 802 has one or more fan sections not located within or covered by a fan duct. Removal of the fan duct (as compared to turbofan engines) permits the use of larger fan or propeller blades able to act upon a larger volume of air than a fan located within a fan duct. As has been discussed elsewhere, the unducted aircraft engine 802 can have an improved propulsive efficiency over a ducted turbofan engine.

In some examples, the unducted aircraft engine 802 includes a forward rotating blade assembly and an aft stationary blade assembly. However, other configurations are possible. For example, instead of being a forward rotating blade assembly and an aft stationary blade assembly, the two blade assemblies could be counter-rotating with respect to one another. As another example, the forward blade assembly could be stationary and the aft blade assembly could be rotating. As another example, the unducted propulsion system may consist of only a rotating blade assembly, e.g., a propeller. The approaches provided herein apply to all of these configurations and the blades referenced in this disclosure may be fan blades or propeller blades. Examples of unducted engines are described elsewhere herein with respect to FIG. 6 and FIG. 7.

The testing hardware 804 is utilized with the unducted aircraft engine 802. The testing hardware 804 is applied to, coupled to, and/or fits around (without touching) the unducted aircraft engine 802. In aspects, the testing hardware 804 is a duct positioned in the upstream direction 812 of the fan or propeller assembly of the unducted aircraft engine 802 that is being tested stoically. The testing hardware 804 is effective to accelerate the flow and constrain the flow direction near the propeller tip to be more like airflow speeds and directions when the aircraft is moving at a higher Mach (speed) flight condition. The approaches provided herein can be used to approximate airflows when the aircraft is moving at forward speeds of . 1 to .35 Mach. Various duct shapes and configurations enhance the aerodynamic loading capability in the tip region of the fan blade, resulting in higher power and flow conditions that may resemble specific mission points.

In aspects, the testing hardware 804 includes a duct that is placed in the position upstream of the unducted aircraft engine 802 in the upstream direction 812. In examples, the duct may have a bell mouth-shaped inlet followed by a diameter approximately that of the propeller that terminates a short distance (e.g., a few inches or a few feet) upstream (in the upstream direction 812) of the blade or fan tips of the unducted aircraft engine 802. In other aspects, the duct may be attached to or utilized with a fan bank to reduce flow area and, thus, accelerate the supplied air.

In other examples, the duct includes a nacelle-type inlet and is placed between the fan bank and the propeller. In other examples, the duct is extended axially over the tips of the propeller to further limit the radial flow and may include a downstream diffuser. In still other aspects, the duct may include pre-swirl vanes cantilevered from the duct walls a short distance (e.g., a few feet) into the stream tube to put a pre-swirl into the flow entering the tip region of the fan or propeller blades.

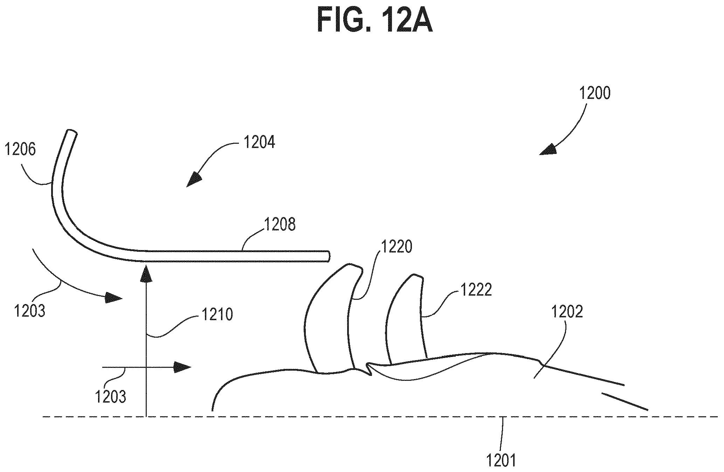

These and other configurations of the duct are described in greater elsewhere herein (e.g., in FIGs. 12A-H). The exact configuration utilized can be selected by a user based upon the needs of the user, the needs of the test, costs to produce the testing hardware 804, or other factors.

In some examples, the testing hardware 804 includes a fan bank (e.g., an assembly of one or more fans). The fan bank produces an increased air flow of air flowing through the testing hardware 804 and the unducted aircraft engine 802. The fan bank may be attached directly to the testing hardware 804 or placed adjacent (not attached).

Referring now to FIG. 8B, one example shows the unducted aircraft engine 802 during flight operations aboard an aircraft. The unducted aircraft engine 802 includes rotating propellers or blades 840 and fixed vanes 842. Airflow 844 flows and impacts the engine as shown, generally in a direction parallel to a longitudinal axis 846 of the unducted aircraft engine 802.

Referring now to FIG. 8C, one example shows the unducted aircraft engine 802 during static or ground tests without the testing hardware 804. In this case, unlike during flight operations, the airflow 844 is not always parallel or generally parallel to the longitudinal axis 846 but instead and especially about the tips of the propellers or blades 840 is drawn in at an angle towards the tips where the angle can approach being perpendicular to the tips of the propellers or blades 840. In FIG. 8C, the unducted aircraft engine 802 may be removed from the aircraft.

Referring now to FIG. 8D, one example shows the unducted aircraft engine 802 during static or ground test using the testing hardware 804. In this case, the testing hardware 804 includes a duct structure 830 with a rounded lip 832 and a swirl vane 834. As shown in FIG. 8D, the airflow 844 is controlled so that its direction and speed are similar to the flight-like conditions shown in FIG. 8B. In FIG. 8D, the unducted aircraft engine 802 may be removed from the aircraft.

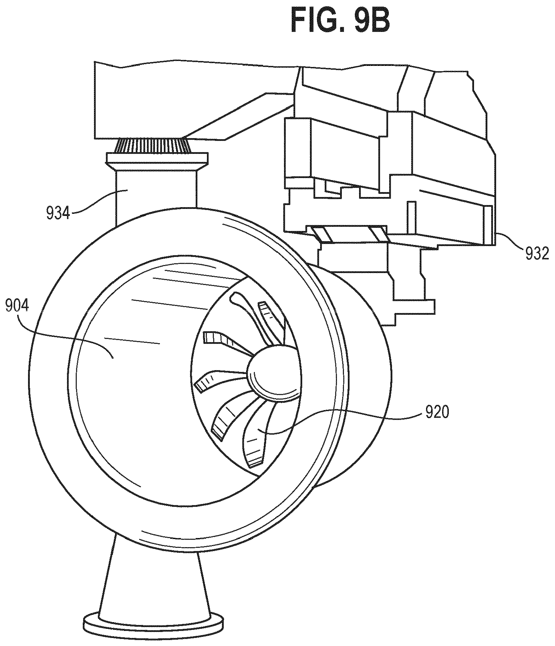

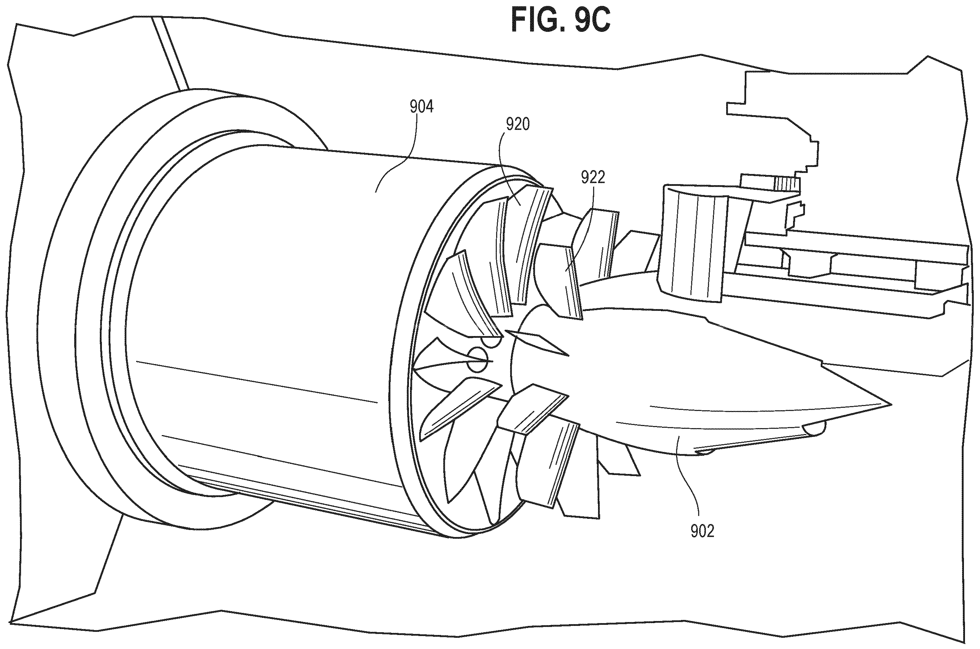

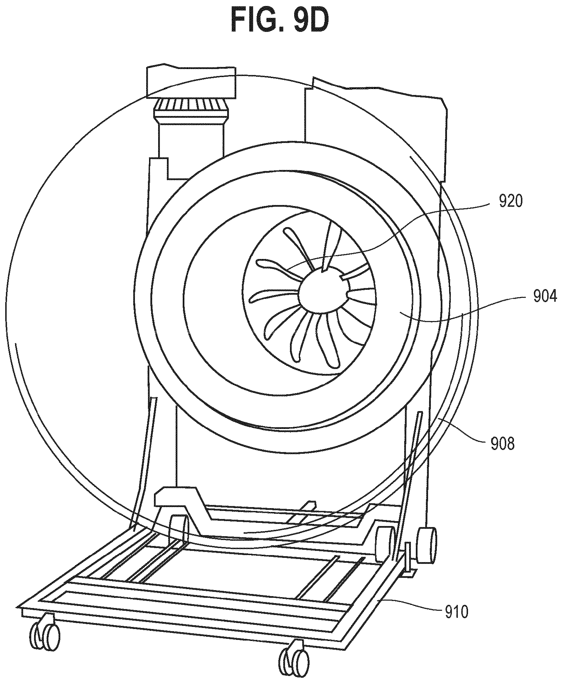

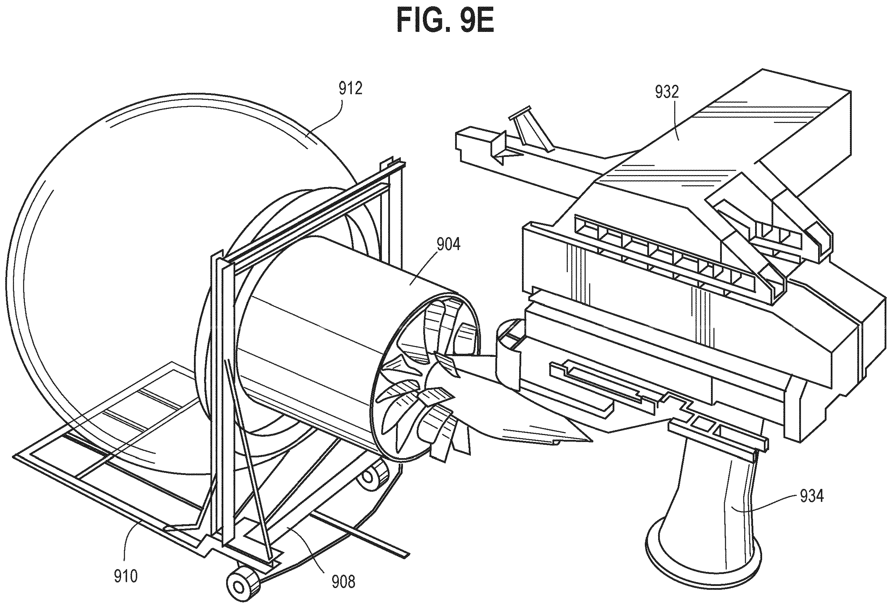

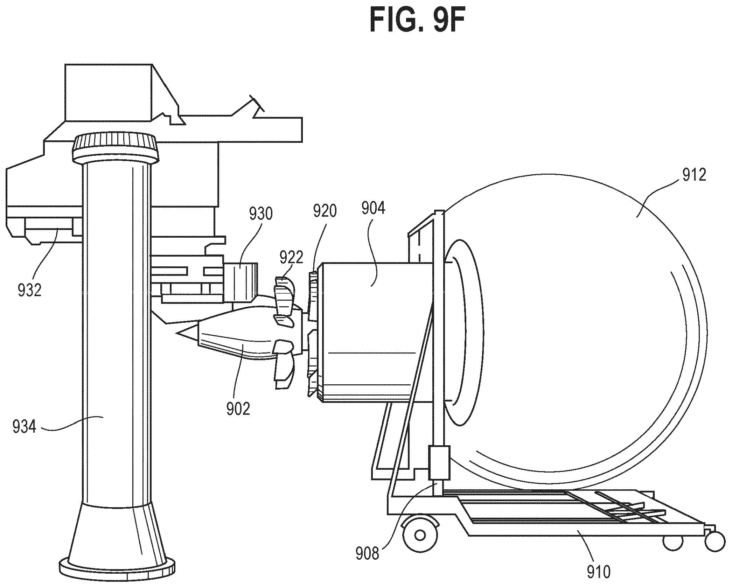

Referring now to FIG. 9A, 9B, 9C, 9D, 9E, and 9F, one example of a system 900 for testing an unducted aircraft engine is described. The system 900 includes an unducted aircraft engine 902, a duct 904, first supporting structure 906, a second supporting structure 908, and a turbulence control structure (TCS) dome 912.

The unducted aircraft engine 902 includes a first fan blade assembly 920 and a second fan blade assembly 922. The first fan blade assembly 920 is a forward rotating blade assembly and the second fan blade assembly 922 is a stationary blade assembly. However, other configurations are possible. For example, instead of being a forward rotating blade assembly and an aft stationary blade assembly as shown, the two fan blade assemblies 920 and 922 could be counter-rotating with respect to one another. As another example, the forward blade assembly (e.g., the first fan blade assembly 920) could be stationary and the aft blade assembly (e.g., the second fan blade assembly 922) could be rotating. As another example, the unducted propulsion system may consist of only a single rotating blade assembly, i.e., a propeller.

The duct 904 is placed in the position upstream of the unducted aircraft engine 902. In examples, the duct 904 is constructed of a metal or, in other examples, a composite material such as glass fiber reinforced epoxy rather than a metal. In aspects, the duct 904 may have a bell mouth-shaped inlet followed by a diameter approximately that of the fan blades or propeller blades that terminate a short distance (e.g., a few feet) upstream of the blade tips. In other examples, the duct 904 may be attached to or be associated with fan bank to reduce flow area and, thus, accelerate the supplied air. In other examples, the duct 904 includes a nacelle-type inlet and is placed between the fan bank and the fan blades or propeller. In yet other examples, the duct 904 is extended axially over the tips of the fan blades or propeller to further limit the radial flow and may include a downstream diffuser. In still other aspects, the duct may include pre-swirl vanes cantilevered from the duct walls a short distance (e.g., fan blade) into the duct to put a pre-swirl into the flow entering the tip region of the fan or propeller blades.

The first supporting structure 906 supports the unducted aircraft engine 902 including an arm structure 930 coupled to a support structure 932. The support structure 932 may be coupled to a vertical pillar 934. In examples, the support structure 932 is movable or adjustable along the vertical pillar 934.

The second supporting structure 908 can be a moveable trailer (or part of a moveable trailer) that supports the duct 904 and the TCS dome 912 and has a flat (trailer bed) portion 910. The second supporting structure 908 can include beams, braces, or other parts constructed of an appropriate material having an appropriate strength to hold the duct 904. In this example, the trailer has wheels and can move the duct 904 and the TCS dome 912 into position with the unducted aircraft engine 902.

The TCS dome 912 is a dome constructed so as to control environmental conditions within the TCS dome 912. In one example, the TCS dome 912 may be constructed of a porous material. One purpose of the TCS dome 912 is that it reduces and/or controls the turbulence of the air injected through the unducted engine 902.

Various examples of duct structures can be utilized. In the example of FIG. 9A, 9B, 9D, and 9F, the duct is shown as having a bell mouth inlet. In the examples of FIG. 9C and 9E, the duct 904 is shown with a nacelle-type inlet.

In examples, the duct 904 is 16 feet in diameter, the bell mouth inlet is 22 feet in diameter, and the unducted engine 902 and the duct 904 have a longitudinal axis 901 that is 20 feet off the ground 903.

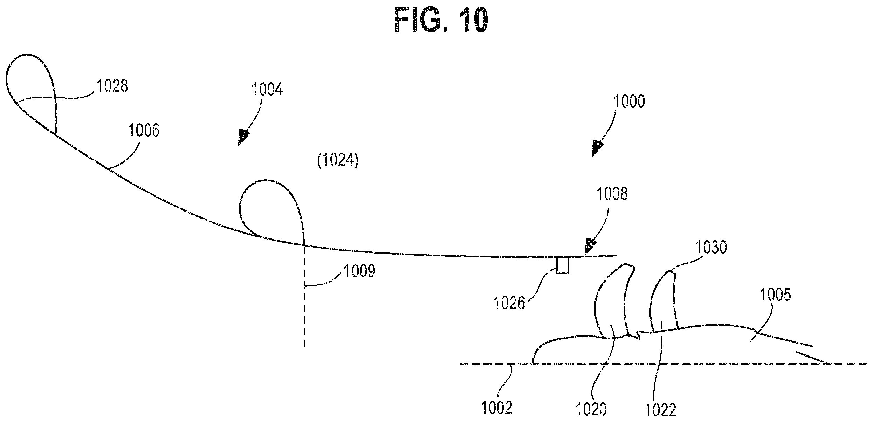

Referring now to FIG. 10, one example of a system 1000 using modular testing hardware to ground test an unducted aircraft engine is described. FIG. 10 shows cross-sectional views taken along a longitudinal axis 1002 of a duct 1004 and an unducted aircraft engine 1005 combination and, for simplicity, shows only the top half of the duct and unducted aircraft engine combination. The duct 1004 includes a concentrator cone 1006 and cylindrical inlet section 1008. The concentrator cone 1006 is detachable from the cylindrical inlet section 1008 as shown along line 1009. Consequently, the duct 1004 is modular in construction and includes multiple parts that attach together. The purpose of the concentrator cone 1006 is to capture and funnel air into the cylindrical inlet section 1008, which directs the now-concentrated air into the unducted aircraft engine 1005.

The unducted aircraft engine 1005 includes a first fan blade assembly 1020 and a second fan blade assembly 1022. The first fan blade assembly 1020 is a forward rotating blade assembly and the second fan blade assembly 1022 is a stationary blade assembly. However, other configurations of blade assemblies are possible. For example, instead of being a forward rotating blade assembly and an aft stationary blade assembly as shown, the two blade assemblies could be counter-rotating with respect to one another. As another example, the forward blade assembly could be stationary and the aft blade assembly could both be rotating. As another example, the unducted propulsion system may consist of only a single rotating blade assembly, i.e., a propeller.

The concentrator cone 1006 includes a lip roll 1028. The purpose of the lip roll 1028 is to direct air towards the unducted aircraft engine 1005. The cylindrical inlet section 1008 includes a standard lip roll 1024. When the concentrator cone 1006 is unused and detached from the cylindrical inlet section 1008, the standard lip roll 1024 directs air to the unducted aircraft engine 1005.

The cylindrical inlet section 1008 includes vanes 1026, one of which is shown in FIG. 10. The purpose of the vanes 1026 is to add swirl ahead of the tip of blades of the first fan blade assembly 1020 to achieve a more representative tip work distribution.

As can be seen in FIG. 10, the inlet 1030 ends before the blade tip of the blades of the first fan blade assembly 1020. Consequently, when the blades of the first fan blade assembly 1020 rotate, they will not strike the duct 1004.

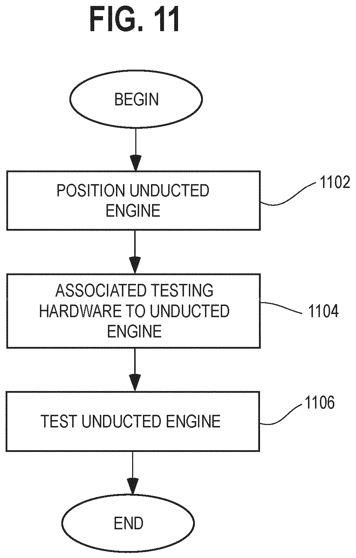

Referring now to FIG. 11, a general testing process using the structures provided herein is described.

At step 1102, the unducted aircraft engine is positioned, lifted or secured for purposes of testing. For instance, the unducted aircraft engine (e.g., the unducted aircraft engine 802) is secured to a supporting structure (e.g., the supporting structure 806 and one or more arms 808). This may be accomplished manually, and, in some cases, automatically.

At step 1104, the unducted aircraft engine (e.g., the unducted aircraft engine 802) and testing hardware (e.g., the testing hardware 804 of FIG. 8) are associated together for testing. For example, the testing hardware may be a duct, which may be placed on a movable trailer (e.g., the second supporting structure 908 of FIG. 9), and the trailer may be positioned so as position the testing hardware generally upstream of the engine. The engine may be at least partially disposed within the testing hardware (e.g., at least partially within a duct when the testing hardware is a duct). When the testing hardware includes a fan bank, the fan bank may be moved into position so as to align with the duct and the engine in a position upstream of the duct. The testing hardware may be moved manually, and, in some cases automatically into position.

At step 1106, the testing of the unducted aircraft engine is conducted. The unducted aircraft engine may include various sensors. The sensors may be coupled with a controller or other device that senses and/or obtains reading from the sensors. The unducted aircraft engine may be activated (turned on) and readings from the sensors obtained. The sensed readings can be used for various purposes such as to determine whether the unducted aircraft engine is operation properly, to adjust models of the engine, or for other purposes.

Various actions can be undertaken as a result of the testing. For example, once the ground testing process is completed, the unducted aircraft engine can be tested in the air under actual flight conditions. In other examples, when the testing identifies problems with the unducted aircraft engine, the unducted aircraft engine can be repaired or modified (e.g., parts or elements of the engine replaced).

The testing hardware provided herein allows the engine to be tested at full power and conditions that come closer to fight conditions than previous approaches. The testing hardware provided herein allows for certification and compliance testing and provides aero conditions suitable for assessing takeoff performance modelling.

Referring now to FIGs. 12A-12H, various configurations 1200 of ducts 1204 (used as testing hardware) are described. These figures show cross-sectional views taken along a longitudinal axis 1201 of a duct 1204 and unducted engine combination and, for simplicity, show only the top half of the duct and unducted engine combination. As mentioned, these different ducts are utilized to test an unducted aircraft engine on the ground with conditions that are near to actual flight conditions as possible.

Advantageously, these ducts increase the speed, velocity, and/or pressure of the flow of air through the unducted engine to levels closer to actual flight conditions than from previous systems or approaches. For example, these structures approximate the airflow speeds and directions that would exist as the airflow impacts the engine when the aircraft is moving forward at speeds of .1 to .35 Mach.

In some configurations, these ducts can be used with a fan bank that further increases the speed, velocity, and/or pressure of the air flow. Advantageously, these structures also increase the power absorption capability of an unducted fan blade or propeller in an aircraft engine.

Each of these figures shows an unducted aircraft engine 1202 with a first fan blade assembly 1220 and a second fan blade assembly 1222. The first fan blade assembly 1220 is a forward rotating blade assembly and the second fan blade assembly 1222 is a stationary blade assembly. However, other configurations are possible. For example, instead of being a forward rotating blade assembly and an aft stationary blade assembly as shown, the two blade assemblies could be counter-rotating with respect to one another. As another example, the forward blade assembly could be stationary and the aft blade assembly could be rotating. As another example, the unducted propulsion system may consist of only a rotating blade assembly, i.e., a propeller.

Each of these figures includes a duct 1204. As shown, the unducted aircraft engine 1202 is at least partially inserted into the duct 1204. Air flows through the duct in the direction indicated by the arrows labeled 1203. The ducts 1204 are generally cylindrical in shape, open on both ends, and form a cavity into which the unducted aircraft engine 1202 is inserted.

Referring now specifically to FIG. 12A, the duct 1204 includes a bell mouth 1206 and a cylindrical section 1208. The unducted aircraft engine 1202 is inserted partially into the duct 1204. The duct 1204 is positioned about the unducted aircraft engine 1202 so that the blades of the first fan blade assembly 1220, when rotating, cannot touch or impact the duct 1204. In this case, the radius (r1) 1210 of the cylindrical section 1208 of the duct 1204 is constant. In examples, the arrangement of FIG. 12A does not require the use of a fan bank.

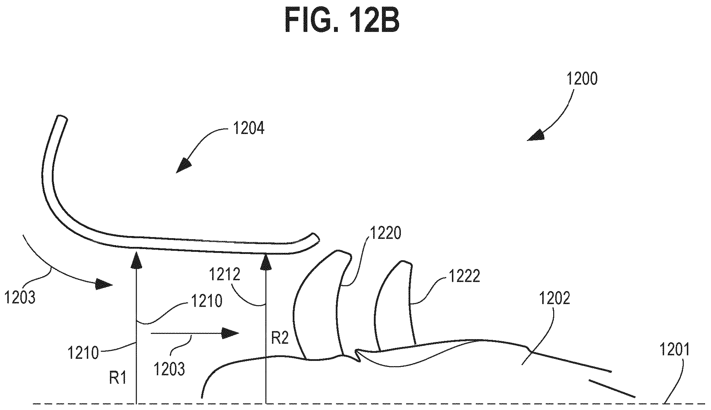

Referring now to FIG. 12B, the duct 1204 includes a bell mouth 1206 and a cylindrical section 1208. The unducted aircraft engine 1202 is inserted partially into the duct 1204. The duct 1204 is positioned about the unducted aircraft engine 1202 so that blades of the first fan blade assembly 1220, when rotating, cannot touch or impact the duct 1204. In this case, the radius of the cylindrical section 1208 is not constant. At a first place of the cylindrical section 1208, a first radius 1210 is r1 and at a second place of the cylindrical section 1208 a second radius 1212 is r2. In aspects, R1 is greater than R2. In examples, the arrangement of FIG. 12B does not require the use of a fan bank.

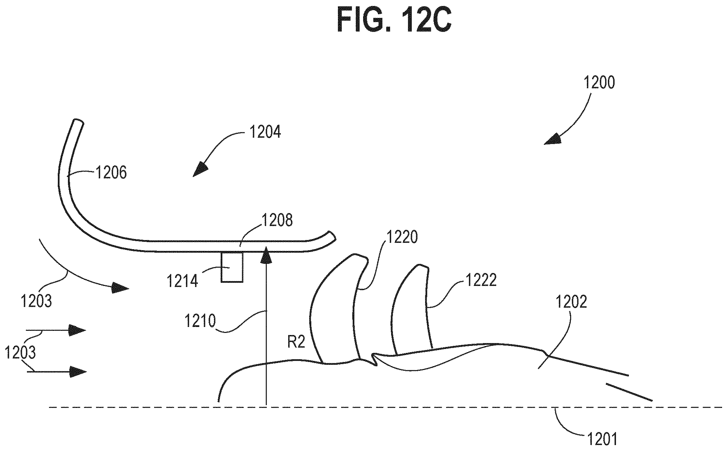

Referring now to FIG. 12C, the duct 1204 includes a bell mouth 1206 with a cylindrical section 1208. The unducted aircraft engine 1202 is inserted partially into the duct 1204. The duct 1204 is positioned about the unducted aircraft engine 1202 so that the blades of the first fan blade assembly 1220, when rotating, cannot touch or impact the duct 1204. In this case, the first radius (r1) 1210 if the cylindrical section 1208 is constant. Pre-swirl vanes 1214 are disposed at the cylindrical section 1208. The pre-swirl vanes 1214 are disposed along across the inter circumference of an inner surface of the cylindrical section 1208. The purpose of the pre-swirl vanes 1214 is to impart swirl in the direction of rotation near the tips of the blades of the first fan blade assembly 1220 and/or the second fan blade assembly 1222. The pre-swirl vanes 1214 reduce the loading in parts of the blades and help the tip flow match the flow needed for an unstalled operation. In examples, the arrangement of FIG. 12C does not require the use of a fan bank.

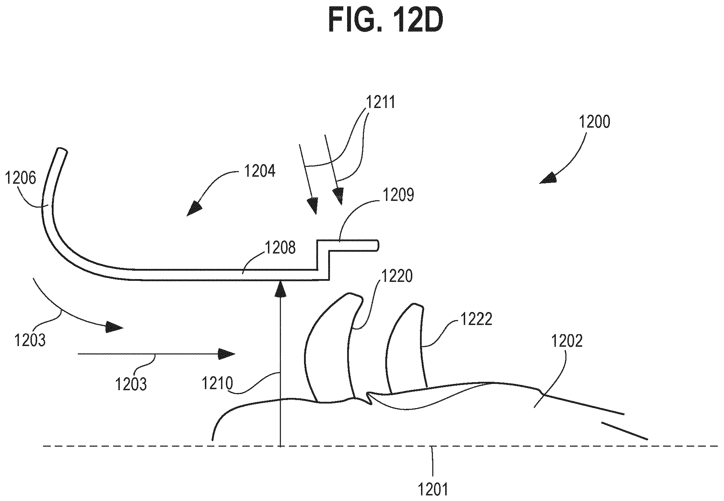

Referring now to FIG. 12D, the duct 1204 includes a bell mouth 1206 with a cylindrical section 1208. The unducted aircraft engine 1202 is inserted partially into the duct 1204. The duct 1204 includes a raised portion (or pocket) 1209, which is positioned so that (when the duct 1204 is positioned about the unducted aircraft engine 1202) the first fan blade assembly 1220, when rotating, cannot touch or impact the duct 1204. The raised portion 1209 of the duct 1204 also shields the first fan blade assembly 1220 from side airflow 1211. The first radius (r1) 1210 of the cylindrical section 1208 is constant. In examples, the arrangement of FIG. 12D does not require the use of a fan bank.

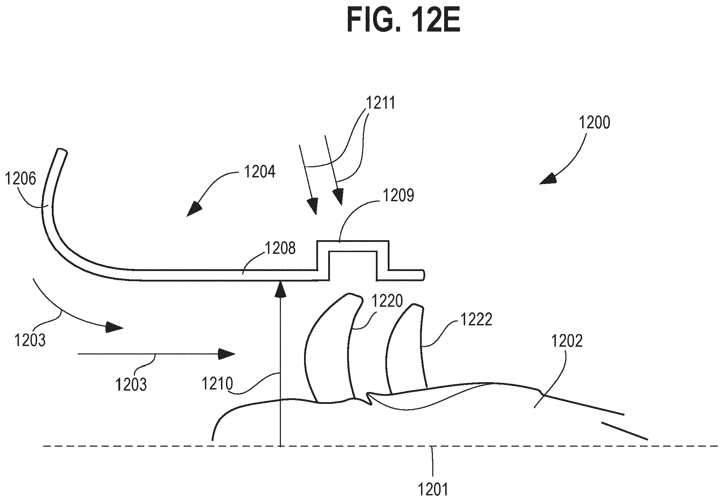

Referring now to FIG. 12E, the duct 1204 includes a bell mouth 1206 with a cylindrical section 1208. The unducted aircraft engine 1202 is inserted partially into the duct 1204. The duct 1204 includes a raised portion (or pocket) 1209, which is positioned so that the blades of the first fan blade assembly 1220, when rotating, cannot touch or impact the duct 1204. In this case, the raised portion 1209 encloses the first fan blade assembly 1220. The raised portion 1209 also shields the first fan blade assembly 1220 and the second fan blade assembly from side airflow 1211. This example includes full rotor coverage of the duct 1204. The first radius (r1) 1210 of the cylindrical section 1208 is constant. In examples, the arrangement of FIG. 12E does not require the use of a fan bank.

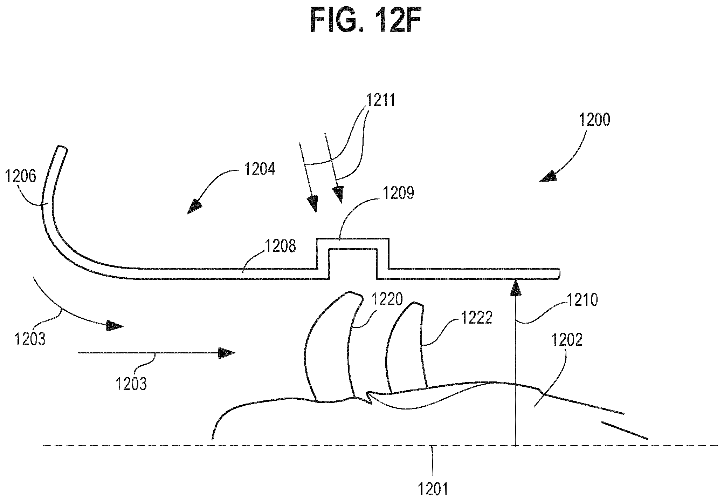

Referring now to FIG. 12F, the duct 1204 includes a bell mouth 1206 with a cylindrical section 1208. The unducted aircraft engine 1202 is inserted partially into the duct 1204. The duct 1204 includes a raised portion (or pocket) 1209, which is configured and positioned so that the first fan blade assembly 1220, when rotating, cannot touch or impact the duct 1204. In this case, the raised portion 1209 encloses the first fan blade assembly 1220. The raised portion 1209 does not need to enclose the second fan blade assembly 1222 because, in this example, the second fan blade assembly 1222 is stationary. The raised portion 1209 also shields the first fan blade assembly 1220 and the second fan blade assembly from side airflow 1211. The first radius (r1) 1210 of the cylindrical section 1208 is constant. In this example, the duct 1204 is longer than previous examples and the raised portion 1209 is positioned towards the middle of the cylindrical section 1208. This example includes full rotor coverage. In examples, the arrangement of FIG. 12F does not require the use of a fan bank. This example also includes a downstream diffuser.

The example of FIG. 12F includes or creates a downstream diffuser. The duct diameter is similar to the fan diameter upstream and downstream of the second fan blade assembly 1222 and keeps air flowing in the axial direction (along longitudinal axis 1201), without much of a radial flow component (perpendicular to longitudinal axis 1201). Because a diffuser increases the pressure in the flow direction, a diffuser at the exit of the duct reduces the pressure in the fan thereby increasing the velocity and hence the mass flow. The pressure at the exit of the duct 1204 is less than the atmospheric pressure.

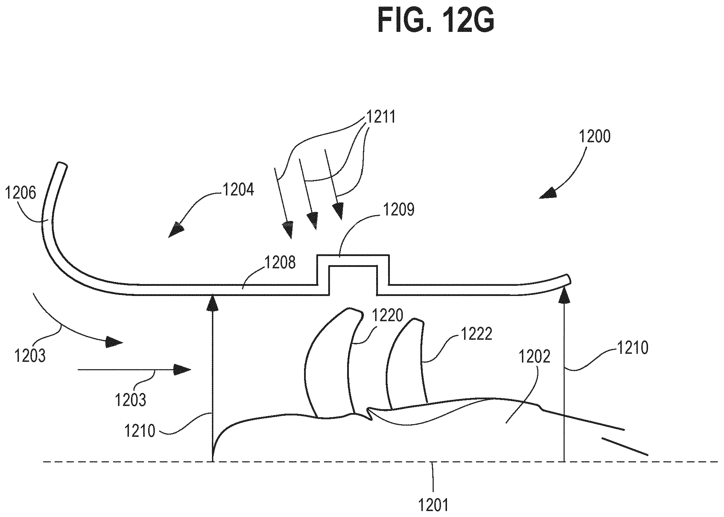

Referring now to FIG. 12G, the duct 1204 includes a bell mouth 1206 with a cylindrical section 1208. The unducted aircraft engine 1202 is inserted partially into the duct 1204. The duct 1204 includes a raised portion (or pocket) 1209, which is configured and positioned so that the first fan blade assembly 1220, when rotating, cannot touch or impact the duct 1204. In this case, the raised portion 1209 encloses the first fan blade assembly 1220. The raised portion 1209 does not need to enclose the second fan blade assembly 1222 because, in this example, the second fan blade assembly 1222 is stationary. The raised portion 1209 also shields the first fan blade assembly 1220 and the second fan blade assembly from side airflow 1211.

In this example, the duct 1204 is longer than some previous examples and the raised portion 1209 is towards the middle of the cylindrical section 1208. This example includes full rotor coverage. In examples, the arrangement of FIG. 12E does not require the use of a fan bank.

This example also includes a downstream diffuser. In this case, the radius of the cylindrical section 1208 is not constant. At a first place, a first radius 1210 is r1 and at a second place in the cylindrical section 1208 a second radius 1212 is r2. In aspects, R1 is greater than R2. In aspects, the first radius 1210 is at the exit of the duct 1204. Making the radius greater at the exit of the duct 1204 creates a diffuser that increases the flow area at the exit and has the advantage of further accelerating the air flow through the duct 1204 and the unducted aircraft engine 1202.

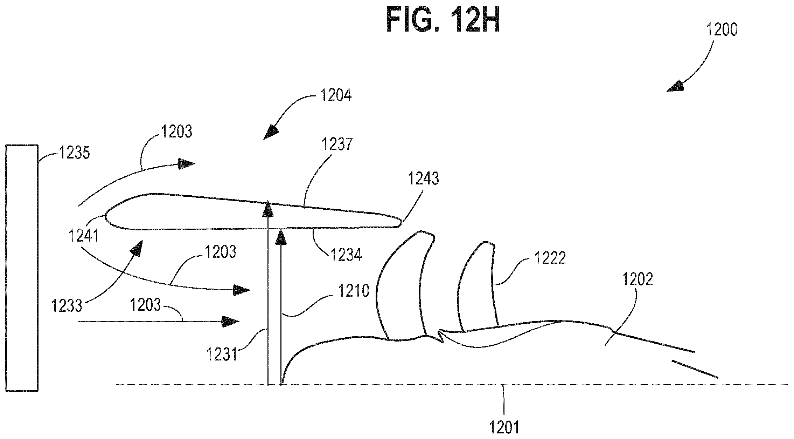

Referring now to FIG. 12H, the duct 1204 includes a nacelle-type inlet 1233 with a cylindrical section 1208. The unducted aircraft engine 1202 is inserted partially into the duct 1204. The duct 1204 is positioned so that the first fan blade assembly 1220, when rotating, cannot touch or impact the duct 1204. In the example of FIG. 12H, a fan bank 1235 supplies the air shown by the flow 1203. In the cross-section shown in FIG. 12H, the duct is shaped like an aircraft wing with an inner surface 1234 having a constant radius 1210, but where the outer surface 1237 having a radius 1231 that changes and tapers from the leading edge 1241 of the duct 1204 to the trailing edge 1243 of the duct 1204. In examples, air flows over the tips of the duct 1204 and consequently simulates the air flow impacting the unducted aircraft engine 1202 during flight.

It will be appreciated that these are only some examples of testing hardware structures and that other structures are possible. For examples, ducts may be arranged as concentric ducts where an inner duct is positioned within an outer duct, and the outer duct is positioned within another duct (and so forth). In addition, portions of structures may be offset circumferentially from the longitudinal axis and different radiuses. In another example, the structures could be interdigitated to overlap where the structures share a common circumferential extent.

## Claims

1. A method of testing an unducted aircraft engine, the method comprising:
obtaining (102) an analytical model (210) of the unducted aircraft engine (204), the unducted aircraft engine (204) including an engine control torque sensor;
running the unducted aircraft engine (204) at full power during a ground test, the full power being a power of the unducted aircraft engine (204) required at takeoff of an aircraft, the unducted aircraft engine (204) being tested using testing hardware (202) that simulates at least some flight-like or operational conditions for the unducted aircraft engine during the ground test;
directly measuring (106) a thrust of the unducted aircraft engine (204) during the ground test to obtain a measured thrust;
measuring a torque (106) of the unducted aircraft engine (204) during the ground test using the engine control torque sensor to obtain a measured torque;
applying sensed operating conditions of the unducted aircraft engine (204) obtained during the ground test to the analytical model (210) to obtain (106) a predicted torque and a predicted thrust of the unducted aircraft engine (204);
comparing (106) the measured torque to the predicted torque and comparing the measured thrust to the predicted thrust to obtain comparison results;
based upon the comparison results, determining (106) one or more modifiers, and modifying the analytical model (210) using the one or more modifiers to obtain a correlated analytical model;
deploying (108) the unducted aircraft engine (204) with the engine control torque sensor aboard the aircraft;
applying sensed operating conditions of the unducted aircraft engine (204) obtained during flight operations of the aircraft to the correlated analytical model to obtain a first thrust contribution, wherein the first thrust contribution is related to a first airflow created by a propeller or fan blades of the unducted aircraft engine (204);
calculating (108) a second thrust contribution of additional airflows of the unducted aircraft engine (204) other than the first airflow using at least some of the sensed operating conditions;
summing the first thrust contribution and the second thrust contribution to obtain an overall thrust; and
determining (108) an action to take based at least in part upon the overall thrust, the action being one or more of examining, repairing or adjusting components of the unducted aircraft engine (204).

2. The method of claim 1, wherein determining the action comprises developing a control schedule to achieve a desired thrust rating.

3. The method of any preceding claim, further comprising determining a torque offset for the engine control torque sensor and calibrating the engine control torque sensor according to the torque offset to obtain a calibrated engine control torque sensor.

4. The method of any preceding claim, wherein calculating the second thrust contribution considers the additional airflows and the additional airflows comprise a second airflow extending through a core of the unducted aircraft engine (204).

5. The method of claim 4, wherein calculating the second thrust contribution considers the additional airflows and the additional airflows comprise a third airflow extending through a non-core portion of the unducted aircraft engine (204).

6. The method of any preceding claim, wherein creating the analytical model utilizes testing of a scale model of the unducted aircraft engine (204).

7. The method of any preceding claim, wherein the analytical model (210) comprises one or more of an electronic file or a machine learning model.

8. The method of any preceding claim, wherein the one or more modifiers comprise one or more scalars, one or more adders, one or more curves, or one or more tables.

9. The method of any preceding claim, wherein the one or more modifiers comprise a first modifier related to a first operational state of the aircraft and a second modifier related to a second operational state of the aircraft.

10. A system, the system comprising:
testing hardware (202) that is associated with an unducted aircraft engine (204) during a ground test of the unducted aircraft engine (204), the testing hardware (202) being configured to simulate at least some operational or flight-like conditions for the unducted aircraft engine (204) during the ground test;
a controller (206) coupled to an electronic memory;
an analytical model (210) stored in the electronic memory;
wherein the testing hardware (202) is configured to test the unducted aircraft engine (204) at full power, the full power being a power of the unducted aircraft engine (204) required at takeoff of an aircraft, to obtain a measured thrust and a measured torque of the unducted aircraft engine (204) during the ground test;
wherein the controller (206) is configured to:
- receive the measured torque produced by the unducted aircraft engine (204) during the ground test, the measured torque being received from an engine control torque sensor;
- receive the measured thrust of the unducted aircraft engine (204) that occurs during the ground test and is directly measured;
- apply sensed operating conditions of the unducted aircraft engine (204) obtained during the ground test to the analytical model (210) to obtain a predicted torque and a predicted thrust of the unducted aircraft engine (204);
- compare the measured torque to the predicted torque and compare the measured thrust to the predicted thrust to obtain comparison results;
- based upon the comparison results, determine one or more modifiers, and modify the analytical model (210) using the one or more modifiers to obtain a correlated analytical model (210);
wherein the unducted aircraft engine (204) is subsequently tested aboard the aircraft and sensed operating conditions of the unducted aircraft engine (204) obtained during flight operations of the aircraft are applied to the correlated analytical model to obtain a first thrust contribution of a first airflow created by a propeller or fan blades of the unducted aircraft engine (204), and wherein a second thrust contribution of additional airflows other than the first airflow is also determined; and
wherein an action to take is determined based upon a summation of the first thrust contribution and a second thrust contribution, the action being one or more of examining, repairing or adjusting components of the unducted aircraft engine (204).

11. The system of claim 10, wherein the action is determined by comparing an overall thrust to a rating.

12. The system of any one of claims 10-11, wherein the additional airflows comprise a second airflow extending through a core of the unducted aircraft engine (204).

13. The system of claim 12, wherein the additional airflows further comprise a third airflow extending through a non-core portion of the unducted aircraft engine (204).

14. The system of any one of claims 10-13, wherein the analytical model (210) comprises one or more of an electronic file or a machine learning model and wherein the one or more modifiers comprise one or more scalars, one or more adders, one or more curves, or one or more tables.

15. The system of any one of claims 10-14, wherein the one or more modifiers comprise a first modifier related to a first operational state of the aircraft and a second modifier related to a second operational state of the aircraft.

## Patentansprüche

1. Verfahren zum Testen eines unummantelten Luftfahrzeugtriebwerks, wobei das Verfahren umfasst:
Erhalten (102) eines analytischen Modells (210) des unummantelten Luftfahrzeugtriebwerks (204), wobei das unummantelte Luftfahrzeugtriebwerk (204) einen Triebwerksteuerungsdrehmomentsensor einschließt;
Betreiben des unummantelten Luftfahrzeugtriebwerks (204) bei voller Leistung während eines Bodentests, wobei die volle Leistung eine Leistung des unummantelten Luftfahrzeugtriebwerks (204) ist, die beim Start eines Luftfahrzeugs erforderlich ist, und wobei das unummantelte Luftfahrzeugtriebwerk (204) unter Verwendung von Testhardware (202) getestet wird, die während des Bodentests zumindest einige flugähnliche Bedingungen oder Betriebsbedingungen für das unummantelte Luftfahrzeugtriebwerk simuliert;
direktes Messen (106) eines Schubs des unummantelten Luftfahrzeugtriebwerks (204) während des Bodentests, um einen gemessenen Schub zu erhalten;
Messen eines Drehmoments (106) des unummantelten Luftfahrzeugtriebwerks (204) während des Bodentests unter Verwendung des Triebwerksteuerungsdrehmomentsensors, um ein gemessenes Drehmoment zu erhalten;
Anwenden der erfassten Betriebsbedingungen des unummantelten Luftfahrzeugtriebwerks (204), die während des Bodentests erhalten wurden, auf das analytische Modell (210), um ein vorhergesagtes Drehmoment und einen vorhergesagten Schub des unummantelten Luftfahrzeugtriebwerks (204) zu erhalten (106);
Vergleichen (106) des gemessenen Drehmoments mit dem vorhergesagten Drehmoment und Vergleichen des gemessenen Schubs mit dem vorhergesagten Schub, um Vergleichsergebnisse zu erhalten;
basierend auf den Vergleichsergebnissen, Bestimmen (106) eines oder mehrerer Modifikatoren und Modifizieren des analytischen Modells (210) unter Verwendung des einen oder der mehreren Modifikatoren, um ein korreliertes analytisches Modell zu erhalten;
Ausfahren (108) des unummantelten Luftfahrzeugtriebwerks (204) mit dem Triebwerksteuerungsdrehmomentsensor an Bord des Luftfahrzeugs;
Anwenden der erfassten Betriebsbedingungen des unummantelten Luftfahrzeugtriebwerks (204), die während des Flugbetriebs des Luftfahrzeugs erhalten wurden, auf das korrelierte analytische Modell, um einen ersten Schubbeitrag zu erhalten, wobei sich der erste Schubbeitrag auf einen ersten Luftstrom bezieht, der von einem Propeller oder Fan-Schaufeln des unummantelten Luftfahrzeugtriebwerks (204) erzeugt wird;
Berechnen (108) eines zweiten Schubbeitrags zusätzlicher Luftströme des unummantelten Luftfahrzeugtriebwerks (204) außer dem ersten Luftstrom unter Verwendung von zumindest einigen der erfassten Betriebsbedingungen;
Summieren des ersten Schubbeitrags und des zweiten Schubbeitrags, um einen Gesamtschub zu erhalten; und
Bestimmen (108) einer zu ergreifenden Maßnahme, die zumindest teilweise auf dem Gesamtschub basiert, wobei die Maßnahme eine oder mehrere der folgenden ist: Untersuchen, Reparieren oder Einstellen von Komponenten des unummantelten Luftfahrzeugtriebwerks (204).

2. Verfahren nach Anspruch 1, wobei das Bestimmen der Maßnahme das Entwickeln eines Steuerungsplans zum Erreichen einer gewünschten Schubnennleistung umfasst.

3. Verfahren nach einem der vorstehenden Ansprüche, ferner umfassend das Bestimmen eines Drehmomentversatzes für den Triebwerksteuerungsdrehmomentsensor und das Kalibrieren des Triebwerksteuerungsdrehmomentsensors entsprechend dem Drehmomentversatz, um einen kalibrierten Triebwerksteuerungsdrehmomentsensor zu erhalten.

4. Verfahren nach einem der vorstehenden Ansprüche, wobei beim Berechnen des zweiten Schubbeitrags die zusätzlichen Luftströme berücksichtigt werden und die zusätzlichen Luftströme einen zweiten Luftstrom umfassen, der sich durch einen Kern des unummantelten Luftfahrzeugtriebwerks (204) erstreckt.

5. Verfahren nach Anspruch 4, wobei beim Berechnen des zweiten Schubbeitrags die zusätzlichen Luftströme berücksichtigt werden und die zusätzlichen Luftströme einen dritten Luftstrom umfassen, der sich durch einen Abschnitt außerhalb des Kerns des unummantelten Luftfahrzeugtriebwerks (204) erstreckt.

6. Verfahren nach einem der vorstehenden Ansprüche, wobei das Erstellen des analytischen Modells das Testen eines maßstabsgetreuen Modells des unummantelten Luftfahrzeugtriebwerks (204) nutzt.

7. Verfahren nach einem der vorstehenden Ansprüche, wobei das analytische Modell (210) eine elektronische Datei und/oder ein maschinelles Lernmodell umfasst.

8. Verfahren nach einem der vorstehenden Ansprüche, wobei der eine oder die mehreren Modifikatoren einen oder mehrere Skalare, einen oder mehrere Addierer, eine oder mehrere Kurven oder eine oder mehrere Tabellen umfassen.

9. Verfahren nach einem der vorstehenden Ansprüche, wobei der eine oder die mehreren Modifikatoren einen ersten Modifikator, der sich auf einen ersten Betriebszustand des Luftfahrzeugs bezieht, und einen zweiten Modifikator, der sich auf einen zweiten Betriebszustand des Luftfahrzeugs bezieht, umfassen.

10. System, wobei das System Folgendes umfasst:
Testhardware (202), die einem unummantelten Luftfahrzeugtriebwerk (204) während eines Bodentests des unummantelten Luftfahrzeugtriebwerks (204) zugeordnet ist, wobei die Testhardware (202) konfiguriert ist, um während des Bodentests zumindest einige Betriebs- oder flugähnliche Bedingungen für das unummantelte Luftfahrzeugtriebwerk (204) zu simulieren;
einen Controller (206), der mit einem elektronischen Speicher gekoppelt ist;
ein im elektronischen Speicher gespeichertes analytisches Modell (210);
wobei die Testhardware (202) konfiguriert ist, um das unummantelte Luftfahrzeugtriebwerk (204) bei voller Leistung zu testen, wobei die volle Leistung eine Leistung des unummantelten Luftfahrzeugtriebwerks (204) ist, die beim Start eines Luftfahrzeugs erforderlich ist, um während des Bodentests einen gemessenen Schub und ein gemessenes Drehmoment des unummantelten Luftfahrzeugtriebwerks (204) zu erhalten;
wobei die Steuerung (206) konfiguriert ist zum:
- Empfangen des gemessenen Drehmoments, das vom unummantelten Luftfahrzeugtriebwerk (204) während des Bodentests erzeugt wird, wobei das gemessene Drehmoment von einem Triebwerksteuerungsdrehmomentsensor empfangen wird;
- Empfangen des gemessenen Schubs des unummantelten Luftfahrzeugtriebwerks (204), der während des Bodentests auftritt und direkt gemessen wird;
- Anwenden der erfassten Betriebsbedingungen des unummantelten Luftfahrzeugtriebwerks (204), die während des Bodentests erhalten wurden, auf das analytische Modell (210), um ein vorhergesagtes Drehmoment und einen vorhergesagten Schub des unummantelten Luftfahrzeugtriebwerks (204) zu erhalten;
- Vergleichen des gemessenen Drehmoments mit dem vorhergesagten Drehmoment und Vergleichen des gemessenen Schubs mit dem vorhergesagten Schub, um Vergleichsergebnisse zu erhalten;
- basierend auf den Vergleichsergebnissen, Bestimmen eines oder mehrerer Modifikatoren und Modifizieren des analytischen Modells (210) unter Verwendung des einen oder der mehreren Modifikatoren, um ein korreliertes analytisches Modell (210) zu erhalten;
wobei das unummantelte Luftfahrzeugtriebwerk (204) anschließend an Bord des Luftfahrzeugs getestet wird und die erfassten Betriebsbedingungen des unummantelten Luftfahrzeugtriebwerks (204), die während des Flugbetriebs des Luftfahrzeugs erhalten wurden, auf das korrelierte analytische Modell angewendet werden, um einen ersten Schubbeitrag eines ersten Luftstroms zu erhalten, der von einem Propeller oder Fan-Schaufeln des unummantelten Luftfahrzeugtriebwerks (204) erzeugt wird, und wobei auch ein zweiter Schubbeitrag zusätzlicher Luftströme außer dem ersten Luftstrom bestimmt wird; und
wobei eine zu ergreifende Maßnahme basierend auf einer Summierung des ersten Schubbeitrags und eines zweiten Schubbeitrags bestimmt wird, wobei die Maßnahme eine oder mehrere der folgenden Maßnahmen ist: Untersuchen, Reparieren oder Einstellen von Komponenten des unummantelten Luftfahrzeugtriebwerks (204).

11. System nach Anspruch 10, wobei die Maßnahme durch Vergleichen eines Gesamtschubs mit einer Nennleistung bestimmt wird.

12. System nach einem der Ansprüche 10 bis 11, wobei die zusätzlichen Luftströme einen zweiten Luftstrom umfassen, der sich durch einen Kern des unummantelten Luftfahrzeugtriebwerks (204) erstreckt.

13. System nach Anspruch 12, wobei die zusätzlichen Luftströme ferner einen dritten Luftstrom umfassen, der sich durch einen Abschnitt außerhalb des Kerns des unummantelten Luftfahrzeugtriebwerks (204) erstreckt.

14. System nach einem der Ansprüche 10 bis 13, wobei das analytische Modell (210) eine elektronische Datei und/oder ein maschinelles Lernmodell umfasst und wobei der eine oder die mehreren Modifikatoren einen oder mehrere Skalare, einen oder mehrere Addierer, eine oder mehrere Kurven oder eine oder mehrere Tabellen umfassen.

15. Verfahren nach einem der Ansprüche 10 bis 14, wobei der eine oder die mehreren Modifikatoren einen ersten Modifikator, der sich auf einen ersten Betriebszustand des Luftfahrzeugs bezieht, und einen zweiten Modifikator, der sich auf einen zweiten Betriebszustand des Luftfahrzeugs bezieht, umfassen.

## Revendications

1. Procédé d'essai d'un moteur d'aéronef non caréné, le procédé comprenant :
l'obtention (102) d'un modèle analytique (210) du moteur d'aéronef non caréné (204), le moteur d'aéronef non caréné (204) comportant un capteur de couple de commande de moteur ;
le fonctionnement du moteur d'aéronef non caréné (204) à pleine puissance pendant un essai au sol, la pleine puissance étant une puissance du moteur d'aéronef non caréné (204) requise au décollage d'un aéronef, le moteur d'aéronef non caréné (204) étant testé à l'aide d'un matériel d'essai (202) qui simule au moins certaines conditions de vol ou opérationnelles pour le moteur d'aéronef non caréné au cours de l'essai au sol ;
la mesure directe (106) d'une poussée du moteur d'aéronef non caréné (204) pendant l'essai au sol afin d'obtenir une poussée mesurée ;
la mesure d'un couple (106) du moteur de l'aéronef non caréné (204) pendant l'essai au sol à l'aide du capteur de couple de commande de moteur afin d'obtenir un couple mesuré ;
l'application au modèle analytique (210) de conditions de fonctionnement détectées du moteur d'aéronef non caréné (204) obtenues au cours de l'essai au sol pour obtenir (106) un couple prédit et une poussée prédite du moteur d'aéronef non caréné (204) ;
la comparaison (106) du couple mesuré au couple prédit et la comparaison de la poussée mesurée à la poussée prédite pour obtenir des résultats de comparaison ;
sur la base des résultats de comparaison, la détermination (106) d'un ou plusieurs modificateurs, et la modification du modèle analytique (210) à l'aide du ou des modificateurs afin d'obtenir un modèle analytique corrélé ;
le déploiement (108) du moteur de l'aéronef non caréné (204) avec le capteur de couple de commande de moteur à bord de l'aéronef ;
l'application au modèle analytique corrélé de conditions de fonctionnement détectées du moteur d'aéronef non caréné (204) obtenues pendant les opérations en vol de l'aéronef pour obtenir une première contribution de poussée, dans lequel la première contribution de poussée est liée à un premier écoulement d'air créé par une hélice ou des pales de soufflante du moteur d'aéronef non caréné (204) ;
le calcul (108) d'une seconde contribution de poussée d'écoulements d'air supplémentaires du moteur d'aéronef non caréné (204) autres que le premier écoulement d'air à l'aide d'au moins certaines des conditions de fonctionnement mesurées ;
l'addition de la première contribution de poussée et de la seconde contribution de poussée pour obtenir une poussée globale ; et
la détermination (108) d'une action à entreprendre sur la base, au moins en partie, de la poussée globale, l'action étant un ou plusieurs parmi examen, réparation ou réglage de composants du moteur d'aéronef non caréné (204).

2. Procédé selon la revendication 1, dans lequel la détermination de l'action comprend l'élaboration d'un programme de commande pour atteindre une poussée nominale souhaitée.

3. Procédé selon l'une quelconque revendication précédente, comprenant en outre la détermination d'un décalage de couple pour le capteur de couple de commande de moteur et l'étalonnage du capteur de couple de commande de moteur en fonction du décalage de couple pour obtenir un capteur de couple de commande de moteur étalonné.

4. Procédé selon l'une quelconque revendication précédente, dans lequel le calcul de la seconde contribution de poussée prend en compte les écoulements d'air supplémentaires et les écoulements d'air supplémentaires comprennent un deuxième écoulement d'air s'étendant à travers un corps central du moteur d'aéronef non caréné (204).

5. Procédé selon la revendication 4, dans lequel le calcul de la seconde contribution de poussée prend en compte les écoulements d'air supplémentaires et les écoulements d'air supplémentaires comprennent un troisième écoulement d'air s'étendant à travers une partie non centrale du moteur d'aéronef non caréné (204).

6. Procédé selon l'une quelconque revendication précédente, dans laquelle la création du modèle analytique utilise l'essai d'une maquette à l'échelle du moteur d'aéronef non caréné (204).

7. Procédé selon l'une quelconque revendication précédente, dans lequel le modèle analytique (210) comprend un ou plusieurs parmi un fichier électronique ou un modèle d'apprentissage automatique.

8. Procédé selon l'une quelconque revendication précédente, dans lequel le ou les modificateurs comprennent un ou plusieurs scalaires, un ou plusieurs additionneurs, une ou plusieurs courbes, ou une ou plusieurs tables.

9. Procédé selon l'une quelconque revendication précédente, dans lequel le ou les modificateurs comprennent un premier modificateur lié à un premier état opérationnel de l'aéronef et un second modificateur lié à un second état opérationnel de l'aéronef.

10. Système, le système comprenant :
un matériel d'essai (202) associé à un moteur d'aéronef non caréné (204) pendant un essai au sol du moteur d'aéronef non caréné (204), le matériel d'essai (202) étant configuré pour simuler au moins certaines conditions opérationnelles ou de vol pour le moteur d'aéronef non caréné (204) pendant l'essai au sol ;
un dispositif de commande (206) couplé à une mémoire électronique ;
un modèle analytique (210) stocké dans la mémoire électronique ;
dans lequel le matériel d'essai (202) est configuré pour tester le moteur d'aéronef non caréné (204) à pleine puissance, la pleine puissance étant une puissance du moteur d'aéronef non caréné (204) requise au décollage d'un aéronef, afin d'obtenir une poussée mesurée et un couple mesuré du moteur d'aéronef non caréné (204) au cours de l'essai au sol ;
dans lequel le dispositif de commande (206) est configuré pour :
- recevoir le couple mesuré produit par le moteur d'aéronef non caréné (204) pendant l'essai au sol, le couple mesuré étant reçu depuis un capteur de couple de commande de moteur ;
- recevoir la poussée mesurée du moteur d'aéronef non caréné (204) qui se produit pendant l'essai au sol et qui est directement mesurée ;
- appliquer au modèle analytique (210) des conditions de fonctionnement détectées du moteur d'aéronef non caréné (204) obtenues au cours de l'essai au sol pour obtenir un couple prédit et une poussée prédite du moteur d'aéronef non caréné (204) ;
- comparer le couple mesuré au couple prédit et comparer la poussée mesurée à la poussée prédite pour obtenir des résultats de comparaison ;
- sur la base des résultats de comparaison, déterminer un ou plusieurs modificateurs, et modifier le modèle analytique (210) à l'aide d'un ou plusieurs modificateurs pour obtenir un modèle analytique corrélé (210) ;
dans lequel le moteur d'aéronef non caréné (204) est ultérieurement testé à bord de l'aéronef et les conditions de fonctionnement détectées du moteur d'aéronef non caréné (204) obtenues pendant les opérations de vol de l'aéronef sont appliquées au modèle analytique corrélé pour obtenir une première contribution de poussée d'un premier écoulement d'air créé par une hélice ou des pales de soufflante du moteur d'aéronef non caréné (204), et dans lequel une seconde contribution de poussée d'écoulements d'air supplémentaires autres que le premier écoulement d'air est également déterminée ; et
dans lequel une action à entreprendre est déterminée sur la base d'une somme de la première contribution de poussée et de la seconde contribution de poussée, l'action étant un ou plusieurs parmi examen, réparation ou réglage des composants du moteur d'aéronef non caréné (204).

11. Système selon la revendication 10, dans lequel l'action est déterminée en comparant une poussée globale à une valeur nominale.

12. Système selon l'une quelconque des revendications 10 à 11, dans lequel les écoulements d'air supplémentaires comprennent un deuxième écoulement d'air qui s'étend à travers un corps central du moteur d'aéronef non caréné (204).

13. Système selon la revendication 12, dans lequel les écoulements d'air supplémentaires comprennent en outre un troisième écoulement d'air s'étendant à travers une partie non centrale du moteur d'aéronef non caréné (204).

14. Système selon l'une quelconque des revendications 10 à 13, dans lequel le modèle analytique (210) comprend un ou plusieurs fichiers électroniques ou un modèle d'apprentissage automatique et dans lequel le ou les modificateurs comprennent un ou plusieurs scalaires, un ou plusieurs additionneurs, une ou plusieurs courbes ou une ou plusieurs tables.

15. Système selon l'une quelconque des revendications 10 à 14, dans lequel le ou les modificateurs comprennent un premier modificateur lié à un premier état opérationnel de l'aéronef et un second modificateur lié à un second état opérationnel de l'aéronef.
